# EUROPÄISCHE PATENTSCHRIFT

(11) **EP 2 528 192 B1**
(45) Veröffentlichungstag und Bekanntmachung des Hinweises auf die Patenterteilung: **22.06.2016**
(21) Anmeldenummer: 12169589.4
(22) Anmeldetag: 25.05.2012
(51) Int. Cl.: F17D 1/02, H02J 3/38, F02C 1/02

(54) **Energiespeicher, Verbundsystem mit Energiespeichern und Verfahren zum Betreiben eines Energiespeichers**
Energy storage device, compound system with energy storage devices and method for operating an energy storage device
Accumulateur d'énergie, système composite doté d'accumulateurs d'énergie et procédé de fonctionnement d'un accumulateur d'énergie

(30) Priorität: 25.05.2011 DE 102011103144; 31.10.2011 EP 11187334
(43) Veröffentlichungstag der Anmeldung: 28.11.2012
(73) Patentinhaber: Erdgas Südwest GmbH, 76275 Ettlingen (DE)
(72) Erfinder: Biehl, Ralf, 76275 Ettlingen (DE)
(74) Vertreter: Kaufmann, Ursula Josefine

(56) Entgegenhaltungen:
- EP-A2- 1 777 389
- CN-Y- 201 323 453
- DE-A1-102006 030 773
- DE-A1-102007 005 494
- JP-A- H06 168 730
- JP-A- H11 159 342

## Beschreibung

### Stand der Technik

Die Erfindung geht aus von einem Energiespeicher, einem Verbundsystem mit Energiespeichern sowie einem Verfahren zum Betreiben eines Energiespeichers nach den Oberbegriffen der unabhängigen Ansprüche.

Es ist bekannt, elektrische Energie aus elektrischen Energieversorgungsnetzen beispielsweise in Pumpspeicherwerken zu speichern und bei Bedarf die gespeicherte elektrische Energie wieder in das elektrische Energieversorgungsnetz zurückzuspeichern. Die Kapazität der Pumpspeicherwerke ist begrenzt. Wird vermehrt Strom aus regenerativen Energien in elektrische Energieversorgungsnetzen eingespeist, sind mehr und größere Speicherkapazitäten notwendig.

In der US 2011 00 03 357 A ist eine Biogasanlage bekannt, die einen Speicher zur verflüssigten Speicherung von Biogas umfasst.

Des Weiteren ist aus der DE 10 2007 016 280 A1 eine Biogasanlage beschrieben, die mittels Energie aus regenerativen elektrischen Energiequellen Biogas erzeugen und, bei Bedarf, Biogas aus einem Gastank rückverstromen kann.

In der DE 10 2009 018 126 A1 ist ein Energieversorgungssystem beschrieben, in dem Wasserstoff aus regenerativ erzeugtem Strom bereitgestellt wird, der in einem Gasspeicher gespeichert und rückverstromt werden kann. Der Wasserstoff kann in Methan umgewandelt und in ein Gasnetz eingeleitet werden.

Des Weiteren kann Biogas einer Biogasanlage in das Gasnetz eingeleitet werden.

In der AT 506 779 A1 ist eine Vorrichtung zur Glättung der elektrischen Ausgangsleistung eines Energiewandlers beschrieben. Regenerativ gewonnene elektrische Energie wird als Methangas verflüssigt gespeichert, und kann regasifiziert werden, um hierbei elektrische Energie freizusetzen.

Eine Vorrichtung zur Speicherung elektrischer Energie in Drucklufttanks geht aus der US 4 849 648 A hervor. In elektrischen Schwachlastzeiten kann Luft in Druckluftbehältern verdichtet werden, und in Schwerlastzeiten kann zusätzliche elektrische Energie aus der Expansionsenergie der Druckluft gewonnen werden.

Die EP 1 777 389 A2 offenbart ein System mit Turbokompressor (Turbolader), mit dem Energie aus einem komprimierten Gas gewonnen werden kann, das aus einem Druckbehälter, aus einer Erdgasleitung oder aus einer unter Druck stehenden Flüssigkeit kommt, in der es physikalisch oder chemisch gelöst war. In einem Erdgasferntransport- oder Erdgasverteilnetz oder einem Druckbehälter steht das Erdgas unter Druck und wird nicht direkt zum Endverbraucher geführt, sondern vor der Einspeisung in ein lokales Verteilnetz oder dergleichen durch die Turbine geleitet und entspannt und dem Endverbraucher zugeführt. Die Abkühlung beim Entspannen wird durch die Kompressionswärme am Kompressorrad ausgeglichen. In Biogasanlagen kann das Biogas von einem typischen Betriebsdruck von 9 bar auf ca. 80 mbar entspannt werden. Der in einem gasbefeuerten BHKW erzeugte Strom kann vor Ort verwendet oder in ein Energieversorgungsnetz eingespeist werden. Es kann auch eine Einspeisung von brennbarem Nutzgas, das entspannt wird, in ein Gasversorgungsnetz erfolgen.

Die DE 10 2007 005 494 A1 offenbart zwar allgemein bei der Beschreibung des Standes der Technik, dass eine Einspeisung von Methan aus einem Zwischenspeicher in ein Gasversorgungsnetz erfolgen kann, wobei die Zugabe von Methan in das herkömmliche Erdgasnetz nur in festgelegten Mengen zu bestimmten Zeiten möglich ist. Es wird vorgeschlagen, das Methan in dem Zwischenspeicher in flüssiger Form zu speichern. Das Methan kann z.B. aus Biogas gewonnen werden. Vor der Verflüssigung wird das Biogas in einer Waschkolonne gereinigt und liegt letztlich in Erdgasqualität vor.

Die DE 10 2006 030 773 A1 offenbart eine Gasreinigungsanlage und ein entsprechendes Betriebsverfahren, wobei auf Erdgasqualität aufgereinigtes Biogas zur Stromerzeugung in ein Blockheizkraftwerk oder alternativ oder zusätzlich in ein Erdgasversorgungsnetz eingespeist werden kann. Aus dem Biogas gewonnenes CO2 kann verflüssigt werden. Zur Einleitung in das Erdgasversorgungsnetz muss das Biogas auf den Betriebsdruck des Erdgasversorgungsnetz verdichtet werden, da übliche Erdgasversorgungsnetze mit erhöhten Betriebsdrücken arbeiten.

Die JP H11 159342 A offenbart, überschüssige Energie in der Nacht bei der Flüssigluftherstellung mit einem Gasturbinensystem zum Verflüssigen von Luft einzusetzen. Die überschüssige elektrische Energie treibt dabei einen Generator als Elektromotor, der einen Kompressor des Gasturbinensystems antreibt.

Bei Tag kann die verflüssigte Luft einem Verdampfer verdampft und einer Brennkammer zugeführt werden. Die Abwärme der Turbine des Gasturbinensystems wird zum Verdampfen von Wasser verwendet, wobei der Dampf der Brennkammer zugeführt wird und die Feuchtigkeit aus dem Abgas in einem Sprühturm kondensiert wird.

Die JP H06 168730 A offenbart ein Energieerzeugungssystem zur Verbesserung eines Kühlsystems zur Kühlung von Kühlwasser, mit einem Gasturbinenmotor als Wärmequelle für einen Absorptionskühler und einer Brennstoffzelle. Erzeugen Gasturbinenmotor und Brennstoffzelle mehr elektrische Energie als benötigt, wird die überschüssige Energie zum Komprimieren von Erdgas eingesetzt, das zwischengespeichert wird. Bei einem Bedarf an elektrischer Energie wird das komprimierte Erdgas mit einer Expansionsturbine entspannt und Kühlwasser des Absorptionskühler zum Kühlen des komprimierten Erdgases eingesetzt.

CN 201 323 453 Y) offenbart ein Mikronetz mit Solarstromerzeugung, Windkraftanlage und biogasbetriebener Energieerzeugungseinheit. Die Komponenten sind über einen DC-Bus mit einem Controller gekoppelt. Die Ausgangsleistung der biogasbetriebenen Energieerzeugungseinheit wird mit der verfügbaren Windenergie und Sonnenenergie abgestimmt und so geregelt, dass ganztägig Energie verfügbar ist, indem die Verfügbarkeit von Windenergie, Sonnenenergie und Biogas berücksichtigt wird. Die Spannung und die Ausgangsleistung des Mikronetzes wird über die Biogaserzeugung beeinflusst.

Die Aufgabe der Erfindung besteht darin, ein Energieverbundsystem zu schaffen, um elektrische Energie, insbesondere in großen Mengen anfallende elektrische Energie, effizient zu speichern und bei Bedarf als Biogasenergie, Erdgasenergie oder Stromenergie zur Verfügung stellen zu können.
Eine weitere Aufgabe besteht darin, ein verbessertes Verfahren zum Betreiben eines Energiespeichers in einem Energieverbundsystem anzugeben, mit dem insbesondere in großen Mengen anfallende elektrische oder Gasenergie ökonomisch zwischengespeichert und wieder verfügbar gemacht werden kann.

### Offenbarung der Erfindung

Die Erfindung erlaubt eine wirtschaftliche Speicherung von in großen Mengen anfallender regenerativer elektrischer Energie in wenigstens einem Energiespeicher mittels Erzeugung und Einlagerung von Biogas in Zeiten eines Überangebots regenerativer Energie. In dem Energiespeicher können insbesondere in großen Mengen anfallende elektrische oder Gasenergie ökonomisch zwischengespeichert und wieder verfügbar gemacht werden. Die Erfindung wird durch die Merkmale des systemanspruchs 1 und des Verfahrensanspruchs 10 definiert. Die abhängigen Ansprüche definieren vorteilhafte Ausgestaltungen der Erfindung.

Gemäß eines ersten Aspekts der Erfindung wird ein Energieverbundsystem mit wenigstens einem Energiespeicher vorgeschlagen, der wenigstens eine Speichereinrichtung für ein methanhaltiges und/oder aus dem methanhaltigen Medium synthetisiertes wasserstoffhaltiges Medium, insbesondere Biogas, umfasst. Der Energiespeicher ist an ein lokales Biogasnetz zur Aufnahme und Abgabe von Biogas und an ein Erdgasnetz zur Aufnahme von Erdgas aus dem Erdgasnetz oder Abgabe von aufbereitetem

Biogas an das Erdgasnetz angeschlossen. Die Speichereinrichtung ist mit einer Vorrichtung zur Erhöhung der Dichte, insbesondere zur Verflüssigung wenigstens eines Teils des der Speichereinrichtung zuzuführenden Mediums gekoppelt.

Das zu speichernde Medium kann insbesondere Erdgas sein oder anthropogenes und/oder biogenes methanhaltiges Gas, im Folgenden kurz als Biogas bezeichnet, welches aus nachwachsenden Rohstoffen, Gülle und dergleichen gewonnen werden kann. Alternativ oder zusätzlich kann das zu speichernde Medium ein aus dem methanhaltigen Medium synthetisiertes wasserstoffhaltiges Medium sein, insbesondere Wasserstoff.

Der Energiespeicher dient vornehmlich zur Speicherung von methanhaltigem Gas, Wasserstoff oder Biogas, das aus einem Biogasnetz bezogen wird. Unter Biogas wird ein anthropogenes und/oder biogenes, methanhaltiges Gas verstanden, welches aus nachwachsenden Rohstoffen, Gülle und dergleichen gewonnen werden kann. Das Biogas kann aus einer lokal benachbarten Biogasanlage, die den Energiespeicher umfasst, oder von einer oder mehreren räumlich verteilten und durch das Biogasnetz verbundenen Biogasanlagen erzeugt werden. Dabei ist angedacht, die für die Biogaserzeugung notwendige elektrische Energie, beispielsweise zur Beheizung des Biogasfermenters, aus elektrisch regenerativ erzeugten Energiewandlereinrichtungen, insbesondere Windkraftanlagen, Photovoltaikanlagen, Wasserkraftanlagen oder ähnliches zu beziehen. Bei Bedarf kann gereinigtes und auf einen hohen Methangehalt gebrachtes gespeichertes Gas in das Erdgasnetz zur Überbrückung von Gasengpässen eingespeist werden. Somit kann zur Speicherung des Mediums auf dezentral verteilte, bereits vorhandene Infrastruktur zurückgegriffen werden, wie etwa Biogasanlagen oder auch Gasversorgungsnetze, die auf diese Weise große Energiemengen aufnehmen können. Einerseits kann das Medium dort zur Verfügung gestellt werden, z.B. Erdgas aus dem Gasversorgungsnetz oder Biogas aus einer Biogasanlage, andererseits kann das Medium dort gespeichert werden, etwa in Teilnetzen des Gasversorgungsnetzes oder in Speichern in der Biogasanlage.

Der Energiespeicher ist erfindungsgemäß mit einem lokalen Biogasnetz und einem Erdgasnetz gekoppelt, wobei sowohl Biogas aus dem Biogasnetz als auch Erdgas aus dem Gasversorgungsnetz im Energiespeicher speicherbar ist. Das Erdgas kann auch dem Gasversorgungsnetz zur Verfügung gestellt werden und/oder dort z.B. in komprimierter Form oder in separaten Speichern in komprimierter oder verflüssigter Form gespeichert werden. Gasversorgungsnetze sind weiträumig angelegt und bieten ein großes Fassungsvermögen.

Der Energiespeicher ist zumindest über das Biogasnetz mit einer Biogasanlage gekoppelt, bzw. kann in einer Biogasanlage integriert sein, wobei Biogas aus der Biogasanlage oder dem Biogasnetz im Energiespeicher speicherbar ist. Das Biogas kann z.B. in separaten Speichern in komprimierter oder verflüssigter Form gespeichert werden. Biogasanlagen sind dezentral meist im ländlichen Raum, fern von Ballungszentren mit zahlreichen Energieverbrauchern, angeordnet und in großer Zahl verfügbar. Sie sind üblicherweise dazu ausgelegt, im Wesentlichen den relativ geringen Energiebedarf vor Ort zu befriedigen und gegebenenfalls darüber hinaus aufbereitetes Biogas in ein Erdgasversorgungsnetz einzuspeisen und/oder Wärme für Verbraucher bereitzustellen. Sie sind bei räumlicher Nähe häufig mit einem Biogasnetz miteinander verbunden, wobei ein Netz auch aus einer einzelnen Biogasleitung gebildet sein kann.

Dabei bietet es sich an, zumindest eine Biogasanlage im Biogasnetz vorzusehen, welche eine Fermentereinrichtung mit wenigstens einem Fermenter zur Biogaserzeugung, eine Einrichtung zur Erzeugung von elektrischer Energie und/oder Wärmeenergie, wenigstens eine elektrische Heizeinrichtung zur Unterstützung der Biogaserzeugung sowie wenigstens eine Speichereinrichtung zum Speichern eines Fluids umfasst. Die Speichereinrichtung kann Teil des Energiespeichers sein. Die elektrische Heizeinrichtung kann mit einer Energiewandlereinrichtung zur Versorgung mit elektrischer Energie gekoppelt sein. Die der Biogasanlage zugeordnete Speichereinrichtung kann extern zur Biogasanlage angeordnet sein, oder auch in der Biogansanlage umfasst sein. Die Speichereinrichtung ist auf jeden Fall mit einer Anlage zur Dichteerhöhung/Verflüssigung wenigstens eines Teils des der Speichereinrichtung zuzuführendem Biogases gekoppelt. Der Energiespeicher kann auch durch einen Verbund von räumlich verteilten, den Biogasanlagen zugeordneten Speichereinrichtungen gebildet sein.

Durch das Zwischenspeichern von elektrischer Energie aus dem elektrischen Energieversorgungsnetz in Form des mit erhöhter Dichte gespeicherten Mediums kann eine Laststeuerung des angekoppelten Energieversorgungsnetzes erreicht werden. Dies ist besonders vorteilhaft bei elektrischen Energieversorgungsnetzen, bei denen Energie von regenerativen Energiewandlern wie Windkraftanlagen oder Photovoltaikanlagen eingespeist wird. Die regenerative elektrische Energiewandlereinrichtung kann insbesondere Energie aus regenerativen Energiequellen gewinnen, beispielsweise Windenergie, Solarenergie, Gezeitenenergie oder dergleichen. Elektrischer Strom aus derartigen Energiewandlereinrichtungen ist auch als Grünstrom bekannt. Es können auch verschiedene Typen von Energiewandlern in der Energiewandlereinrichtung kombiniert sein und elektrischen Strom für die Unterstützung der Biogaserzeugung bereitstellen sowie optional auch für etwaige an die Biogasanlage angeschlossene Wärmeabnehmer.

Vorteilhaft kann die Einrichtung zur Erhöhung der Dichte des Mediums direkt oder indirekt durch einen Teil des Mediums betreibbar sein. Vorteilhaft ist auch, den eingespeisten Grünstrom der Energiewandlereinrichtung zu verwenden. So kann ein Verdichter zur Dichteerhöhung angetrieben werden, mit dem das zu speichernde Medium in den Speicher gepresst wird. Ebenso ist denkbar, dass ein Kälteaggregat zum Verflüssigen des zu speichernden Mediums mit Energie aus dem Medium und/oder dem eingespeisten Grünstrom der Energiewandlereinrichtung betrieben werden kann. Das Verflüssigen von Biogas ist besonders effizient, um Biogas zu speichern, da die Dichte des Biogases in der flüssigen Phase um einen Faktor von rund 600 höher ist als in der Gasphase. Damit können kleine Speichervolumina in den üblicherweise relativ kleinen Biogasanlagen ausreichend sein, um große Mengen Biogas und damit Energie aus der Energiewandlereinrichtung zu speichern.

Die Speichereinrichtung kann einen Gasspeichertank umfassen und/oder einen Speichertank für verflüssigtes Gas. Das in dem Gasspeichertank der Speichereinrichtung zu speichernde Fluid kann ein Gas sein, etwa Biogas oder Erdgas und/oder Wasserstoff, der aus dem Biogas synthetisiert wurde, oder auch Flüssiggas, insbesondere verflüssigtes Biogas, das wegen seines Methangehalts praktisch verflüssigtem Erdgas (LNG) entspricht, oder auch verflüssigter Wasserstoff. Die Speichereinrichtung kann mit besonderem Vorteil zur Speicherung von Fluiden unter Tieftemperaturbedingungen über Zeiträume nach Bedarf, z.B. Stunden, Tage, Wochen, ausgelegt sein.

Wird aus Biogas oder Erdgas Wasserstoff synthetisiert, kann die Speichereinrichtung mit einem Reaktor zur Wasserstofferzeugung gekoppelt sein. Der Reaktor kann einen Reformer zur Dampfreformierung oder zur autothermen Reformierung des Biogases, einen Reaktor zur partiellen Oxidation, einen Reaktor zur Aufspaltung des Methans nach dem Kvaerner-Verfahren oder dergleichen, umfassen.

Grundsätzlich kann die Speichereinrichtung Methan und/oder Wasserstoff als dezentrale Versorgungseinrichtung Verbrauchern zur Verfügung stellen. Die Speicherzeiten für das Fluid können durch eine geeignete Auslegung der Speichereinrichtung für die geplante Verwendung leicht angepasst werden. Insbesondere kann die Speichereinrichtung einen Wasserstoffspeicher aufweisen.

Vorteilhaft kann der Energiespeicher einen Eingang zum Einspeisen elektrischer Energie aus einem elektrischen Energieversorgungsnetz in den Energiespeicher und einen Ausgang zum zeitverzögerten Abgeben elektrischer Energie aus dem Energiespeicher in das elektrische Energieversorgungsnetz umfassen, wobei der Energiespeicher bevorzugt eine Entspannungsturbine umfasst, die zum Abgeben elektrischer Energie aus der Speichereinrichtung durch das Medium mit erhöhter Dichte antreibbar ist. Somit kann insbesondere regenerativ erzeugte elektrische Energie aus dem elektrischen Energieversorgungsnetz entnommen, in Form des zu speichernden Mediums mit erhöhter Dichte durch Kompression oder Verflüssigung zwischengespeichert und durch Entspannen des Mediums wieder in das elektrische Energieversorgungsnetz zurückgespeist werden. Durch das Verdichten eines gasförmigen Mediums wie z.B. Erdgas oder Biogas kann eine sehr hohe Energiemenge pro Volumeneinheit gespeichert werden. Während ein Pumpspeicherwerk etwa 1,4 kWh/m³ Wasser speichern kann und ein Kavernenspeicher etwa 10,5 kWh/m³ Erdgas, kann mit Flüssigerdgas LNG ein Vielfaches davon gespeichert werden, nämlich etwa 6 300 kWh/m³. Vorteilhaft kann zudem bei der Verflüssigung von Biogas der inhärente Reinigungseffekt der Verflüssigung des Biogases genutzt werden, indem vor dem Methan auskondensierende Bestandteile entfernt werden, so dass das bei der Wiedererwärmung des flüssigen Biogases entstehende Gas erheblich reiner ist als vor der Verflüssigung und Erdgasqualität besitzt.

Gemäß einer vorteilhaften Ausgestaltung des Energiespeichers kann eine Entspannungsturbine vorgesehen sein, die zum Abgeben elektrischer Energie aus der Speichereinrichtung durch das Medium mit erhöhter Dichte antreibbar ist, um die elektrische Energie wieder in das elektrische Energieversorgungsnetz zurückzuspeichern. Die Entspannungsturbine setzt die im Medium durch Erhöhung der Dichte gespeicherte Energie wieder in elektrische Leistung um, die gezielt wieder in das elektrische Energieversorgungsnetz abgegeben werden kann, etwa wenn eine Netzlast ansteigt. Das Medium kann dadurch seine Dichte bei Normalbedingungen erreichen. Im Falle des verflüssigten Mediums kann sich das Medium auch auf Normalbedingungen erwärmen.

Das entspannte Medium kann vor Ort verwendet werden und/oder einem Gasversorgungsnetz zugeführt werden, um entfernten oder benachbarten industriellen, kommunalen oder privaten Verbrauchern zur Verfügung gestellt zu werden. Das Medium kann insbesondere z.B. in der Umgebung einer Biogasanlage benachbarten Verbrauchern zur Verfügung gestellt werden, womit effiziente kleinräumige Versorgungszentren mit Erdgas und/oder Biogas und/oder Wasserstoffrealisiert werden können.

Die Verflüssigung des zu speichernden Mediums kann mit gängigen Kälteanlagen und Verfahren erreicht werden, wie etwa dem Linde-Verfahren, mit einem Hubkolbenexpander, einer Entspannungsturbine oder dergleichen. Ebenso kann das Medium in einer besonders einfachen Ausgestaltung in einem Wärmetauscher, gegebenenfalls in einem mehrstufigen Prozess, durch flüssigen Stickstoff abgekühlt und verflüssigt werden, wie allgemein bei der Erdgasverflüssigung bekannt ist. Gemäß einer vorteilhaften Ausgestaltung des Energiespeichers kann die Vorrichtung zur Dichteerhöhung eine Kälteanlage und/oder einen mit Flüssiggas betreibbaren Wärmetauscher zur Verflüssigung des der Speichereinrichtung zuzuführenden Mediums umfassen. Die Verflüssigung des Mediums erlaubt eine besonders hohe Speicherdichte. Die eingespeiste elektrische Leistung kann zur Kompression und/oder zur Verflüssigung des zu speichernden Mediums eingesetzt werden. Handelt es sich bei dem Medium um Biogas, kann die eingespeiste elektrische Leistung nicht nur zur Dichteerhöhung, sondern zusätzlich oder alternativ auch zur Biogaserzeugung eingesetzt werden, indem eine Fermentereinrichtung beheizt wird, welche das Biogas erzeugt. Andere Wärmequellen können dann während der Zeit der elektrischen Beheizung abgekoppelt oder abgestellt werden.

Vorteilhaft kann flüssiger Stickstoff zum Verflüssigen des Biogases genutzt werden. Da die Siedetemperatur des flüssigen Stickstoffs unterhalb derjenigen der wesentlichen Bestandteile des Biogases, insbesondere des Methans, liegen, kann das Biogas praktisch vollständig in die flüssige Phase überführt werden. Stickstoff ist leicht zu verflüssigen und vor Ort zu speichern und preiswert in großer Menge verfügbar. Die Verflüssigung kann optional auch zur Reinigung des Biogases eingesetzt werden, indem jeweils Bestandteile, die beim Abkühlen des Biogases vor dem Methan kondensieren, in geeigneter Weise entfernt werden. Vorteilhaft kann das gespeicherte Biogas genutzt werden, um entweder in das Erdgasversorgungsnetz eingespeist zu werden oder, mit besonderem Vorteil, in das elektrische Versorgungsnetz zurück eingespeist zu werden, indem gespeichertes Biogas verstromt wird. Die dabei entstehende Wärme kann vorteilhaft vor Ort genutzt werden.

Es kann eine Leitvorrichtung vorgesehen sein, um einen wenigstens wesentlichen Teil des von der Fermentereinrichtung erzeugten Biogases in die Anlage zu leiten, wobei die Leitvorrichtung abhängig von einem Betriebszustand der elektrischen Heizeinrichtung betreibbar sein kann. Dies hat den Vorteil, dass ein Gasfluss des überschüssigen Biogases gezielt umgeleitet werden kann und nicht in die weiteren Anlagenteile der Biogasanlage gelangt (beispielsweise das Blockheizkraftwerk). Das Biogas kann im Speicherbetrieb in gewünschter Menge, beispielsweise vollständig, in die Speichereinrichtung geleitet werden. Die Leitvorrichtung kann ein Absperrventil umfassen, um bei einem gegebenen Betriebszustand der elektrischen Heizeinrichtung das Biogas ausschließlich in die Anlage zu leiten. Die überschüssige Energie der Energiewandlereinrichtung kann damit sehr ökonomisch gespeichert werden. Ferner ist leicht festzustellen, welche elektrische Energiemenge von der Energiewandlereinrichtung letztendlich als Biogas in den Speicher gelangt ist. Sowohl die in die elektrische Heizeinrichtung eingespeiste elektrische Energie als auch die Menge des damit erzeugten Biogases können mit hoher Genauigkeit erfasst und bewertet werden.

Vorteilhaft kann die am Biogasnetz oder direkt am Energiespeicher angeschlossene Biogasanlage in zwei Betriebszuständen betrieben werden. Im ersten Betriebszustand erfolgt der Normalbetrieb mit der Generierung von Biogas, Wärme und/oder Elektrizität zur Eigenversorgung und/oder zum Betrieb eines Blockheizkraftwerks mit angeschlossenen Verbrauchern im kleineren Maßstab. Im zweiten Betriebszustand erfolgt ein Speicherbetrieb von Biogas, in dem Biogas mit gegenüber normalen Bedingungen erhöhter Dichte gespeichert wird. Vorteilhaft wird die elektrische Energie zum Erhöhen der Dichte, etwa zur Kompression oder insbesondere zur Verflüssigung von Biogas, eingesetzt und gegebenenfalls auch zur Synthetisierung von Wasserstoff aus Biogas sowie zu dessen Speicherung. Hierdurch ist eine Laststeuerung des elektrischen Energieversorgungsnetzes möglich, welches durch die von der Energiewandlereinrichtung eingespeiste elektrische Energie ungünstig belastet wird. Optional kann im Speicherbetrieb die von der Energiewandlereinrichtung eingespeiste elektrische Energie ausschließlich zur Biogaserzeugung und Speicherung dieses Biogases mit erhöhter Dichte genutzt werden. Dabei kann auch ein Überschuss von Biogas weit über den Normalbetrieb hinaus erzeugt werden.

Gemäß einer vorteilhaften Ausgestaltung des Energiespeichers kann eine Datenschnittstelle vorgesehen sein, um wenigstens eine Aufnahmekapazität der Speichereinrichtung und/oder ein betriebsrelevanter Zustand der Vorrichtung zur Dichteerhöhung an eine Leitstelle zu übermitteln. Dadurch gelingt eine günstige Einbindung des Energiespeichers in ein Verbundsystem mit einer Mehrzahl von insbesondere dezentral und weiträumig verteilten Energiespeichern. Eine Überlastung einzelner Anlagen kann vermieden werden.

Gemäß einer vorteilhaften Ausgestaltung des Energiespeichers kann eine direkte oder indirekte Kopplung zu einer Mehrzahl von weiteren Energiespeichern über das Biogasnetz, insbesondere abhängig von einem betriebsrelevanten Zustand der Speichereinrichtung und/oder der Vorrichtung zur Dichteerhöhung, vorgesehen sein. Damit ist eine Speicherung von Energie einer oder mehrerer Groß-Energieerzeugungsanlagen verteilt über dezentral angeordnete Energiespeicher möglich. So können Großerzeuger von elektrischer Energie wie Windparks etc. durch im Wesentlichen vorhandene oder nur geringfügig zu adaptierende dezentrale Infrastruktur besser genutzt werden.

Das erfindungsgemäße Energieverbundsystem umfasst ein Biogasnetz mit zumindest einer angekoppelten Biogasanlage, einem Erdgasnetz und einem elektrischen Energieversorgungsnetz mit zumindest einer angekoppelten regenerativen elektrischen Energiewandlereinrichtung. Im Biogasnetz sind zumindest ein vorbeschriebener Energiespeicher und zumindest eine Biogasanlage zu einem durch eine Leitstelle in steuernder Verbindung stehenden Verbundsystem verbunden. Der Energiespeicher ist wenigstens zeitweise zur Laststeuerung eines elektrischen Energieversorgungsnetzes und/oder zur Gaseinspeisung in das Erdgasnetzes einsetzbar. Das elektrische Energieversorgungsnetz ist mit wenigstens einer Energiewandlereinrichtung zur regenerativen Stromerzeugung gekoppelt, wobei elektrische Energie aus dem elektrischen Energieversorgungsnetz im Überkapazitätsfall zur Biogaserzeugung in der Biogasanlage zur Biogaserzeugung und/oder zur Verdichtung eines Mediums in der Speichereinrichtung verwendbar ist, und das entstehende Biogas in dem Energiespeicher einspeisbar ist, aufbereitetes Biogas aus dem Energiespeicher in das Erdgasnetz im Gasunterversorgungsfall einspeisbar ist und elektrische Energie aus dem Energiespeicher im Unterversorgungsfall in das elektrische Energieversorgungsnetz zurückspeisbar ist. Die zumindest eine Speichereinrichtung des zumindest einen Energiespeichers in dem Gas-/Biogas-/Stromverbundnetz ist mit einer Vorrichtung zur Erhöhung der Dichte wenigstens eines Teils des der Speichereinrichtung zuzuführenden Mediums gekoppelt. Somit ist ein Energieverbundsystem vorgeschlagen, in dem zumindest ein Energiespeicher im Biogasnetz ein Medium verdichtet speichern kann, und somit z.B. mittels regenerativ erzeugten Strom gewonnenes Biogas verflüssigt speichern, und bei einem Strombedarf verstromen oder bei einem Erdgasbedarf reinigen und in einer erhöhten Methankonzentration in das Erdgasnetz abgeben kann. Es ist des Weiteren möglich, im Energiespeicher Erdgas zu speichern, um Strom bei Bedarf zur Verfügung zu stellen, oder Blockheizkraftwerke im Biogasnetz in Biogas-Engpasssituationen zu betreiben. Die Leitstelle steuert bedarfsweise den Energietransfer zwischen den drei Netzen, bzw. die Umwandlung von Strom in Biogas, von Biogas in Erdgas, von Biogas in Strom, von Erdgas in Strom und regelt die Speicherung des Biogases bzw. des Erdgases.

Das steuernde Verbundsystem verknüpft eine Mehrzahl von Energiespeichern, und Biogasanlagen durch eine Leitstelle, wobei die Energiespeicher in den Biogasanlagen integriert oder räumlich verteilt im Biogasnetz angeordnet sind, und wenigstens zeitweise zur Laststeuerung eines elektrischen und/oder Gasenergieversorgungsnetzes eingesetzt sind. Das elektrische Energieversorgungsnetz ist wenigstens mit einer Energiewandlereinrichtung gekoppelt, wobei elektrische Energie aus dem elektrischen Energieversorgungsnetz in einen oder mehrere der Energiespeicher einspeisbar und zeitverzögert elektrische Energie aus einem oder mehreren der Energiespeicher in das elektrische Energieversorgungsnetz zurückspeisbar ist, wobei die Speichereinrichtung mit einer Vorrichtung zur Erhöhung der Dichte wenigstens eines Teils des der Speichereinrichtung zuzuführenden Mediums gekoppelt ist. Die Belastung des elektrischen Energieversorgungsnetzes kann gezielt verringert werden, ohne die einspeisenden regenerativen elektrischen Energieerzeugungsanlagen, etwa Windkraftanlagen und/oder Photovoltaikanlagen, abschalten zu müssen. Vorteilhaft kann zur Laststeuerung Biogas speicherbar, insbesondere verflüssigbar, sein und/oder gespeichertes Biogas verstrombar und in das elektrische Energieversorgungsnetz einspeisbar sein. Ein Gasvorrat des Erdgasnetzes kann gepuffert werden bzw. ein temporärer Gasmangel ausgeglichen werden. Durch ein Verflüssigen von Biogas kann durch die Regasifizierung ein in das Erdgasnetz einspeisbares und gereinigtes Methangas bereitgestellt werden.

Neben der sehr hohen speicherbaren Energiemenge von komprimierten oder sogar verflüssigtem Erdgas oder Biogas oder auch Wasserstoff im Vergleich zu Pumpspeicherwerken steht bereits jetzt eine sehr hohe Kapazität in Form von dezentralen Biogasanlagen oder Gasversorgungsnetzen zur Verfügung. Hiermit können an windstillen, kalten und/oder sonnenarmen Tagen die ungenügende Stromproduktion von regenerativen Energiequellen bzw. Energiewandlern kompensiert werden, die dagegen an windigen und/oder sonnigen Tagen von elektrischen Energieversorgungsnetzen nicht aufgenommen werden kann und zu unerwünschten Instabilitäten oder Ausfällen des Energieversorgungsnetzes führen kann. Die Belastung des elektrischen Energieversorgungsnetzes kann gezielt verringert werden, ohne die einspeisenden Energieerzeugungsanlagen, d.h. Energiewandlern wie etwa Windkraftanlagen und/oder Photovoltaikanlagen, abschalten zu müssen.

Vorteilhaft kann zur Laststeuerung ein methanhaltiges Medium wie Erdgas und/oder Biogas und/oder ein aus dem methanhaltigen Medium synthetisiertes wasserstoffhaltiges Medium, etwa Wasserstoff, speicherbar, insbesondere verflüssigbar, sein und/oder gespeichertes Medium wieder verstrombar und in das elektrische Energieversorgungsnetz zurück einspeisbar sein.

Das Energieverbundsystem ermöglicht vorteilhafterweise eine bidirektionale Kopplung von Strom- und Gasversorgungsnetz. Regenerativer Strom (Grünstrom) erhöht die Dichte von methanhaltigem Medium wie Erdgas oder Rohbiogas und/oder Wasserstoff. Das Rohbiogas wird insbesondere durch Verflüssigen des Rohbiogases vorteilhaft gereinigt, da Verunreinigungen früher auskondensieren als das Methan und das verflüssigte Biogas praktisch nur Methan aufweist. Das Medium wird mit hoher Dichte komprimiert oder verflüssigt gespeichert und je nach Bedarf als Regel- und Reserveenergie über eine Rückverstromung in das elektrische Energieversorgungsnetz zurückgespeist.

Grundsätzlich kann solch eine Rückverstromung z. B. mit Hilfe von Gaskraftwerken, Gas- und Dampf-Kraftwerken (GuD) oder Blockheizkraftwerken (BHKW) erfolgen. Dies kann vor Ort z.B. in der jeweiligen Biogasanlage erfolgen oder das gespeicherte verflüssigte Medium wird zur Verstromung entsprechend zu größeren Anlagen transportiert oder über das Gasversorgungsnetz reformiert, d.h. rückverdampft, zur Verstromung geführt. In einer vorteilhaften Variante kann eine Entspannungsturbine im Energiespeicher und/oder in einer Biogasanlage angeschlossen am Biogasnetz umfasst sein, die zum Abgeben elektrischer Energie aus der Speichereinrichtung durch das Medium mit erhöhter Dichte antreibbar ist. Somit kann eine Entspannungsturbine eingesetzt werden, welche durch das Medium mit höherer Dichte antreibbar ist, das sich dabei entspannt.

Dezentral erzeugter regenerativer Strom kann auf diese Weise in einen CO₂-neutralen Energieträger mit hoher Energiedichte umgewandelt werden. Erfolgt die Rückverstromung dezentral in wärmegeführten BHKW, kann der Nutzungsgrad durch Kraft-Wärme-Kopplung (KWK) weiter erhöht und Verbraucher, z.B. Haushalte, mit einem emissionsneutralen Erdgas-Substitut versorgt werden. Zweckmäßigerweise werden eine Mehrzahl von dezentralen Biogasanlagen zentral gesteuert, die Biogasanlagen werden stromseitig in Spitzenzeiten von Netz genommen, wenn die einspeisenden Energieerzeugungsanlagen mehr elektrische Energie liefern als benötigt, und gleichzeitig wird die Gasproduktion kryogen in den Biogasanlagen gespeichert.

Darüber hinaus kann das gespeicherte Medium im Wärme- und Verkehrsektor eingesetzt werden, also z. B. zur Bereitstellung von Prozesswärme oder in konventionellen PKW oder in Hybridfahrzeugen wie auch zur Erhöhung der Reichweite von Elektrofahrzeugen. Aus dem gespeicherten Medium lässt sich neben Methan auch Wasserstoff als weiterer Kraftstoff synthetisieren.

Ein besonderer Vorteil gegenüber anderen Speicherkonzepten ist die Nutzung der bestehenden Infrastruktur wie Gasnetze, Gasspeicher und Endverbrauchergeräte. Technologien für die Handhabung von Erdgas bzw. Biogas sind kommerziell verfügbar, was für die Wasserstofftechnologie nur bedingt der Fall ist.

Vorteilhaft können die im Biogasnetz integrierten Biogasanlagen und/oder Biogas- oder Erdgasversorgungsnetz zur Energiespeicherung beitragen und in ihrer Wirtschaftlichkeit optimiert werden. Darüber hinaus kann optional die Einsatzfähigkeit von Biogasanlagen vorteilhaft nicht allein auf die Speicherung ausgelegt sein, sondern auch zusätzlich für den Aufbau neuer Versorgungsstrukturen gerade im ländlichen Raum dienen. Durch den Einsatz von verflüssigtem methanhaltigem Medium ("LNG") wie Erdgas und insbesondere Biogas oder auch Wasserstoff können teuere Transportleitungen vermieden werden und effiziente Energiesysteme aufgebaut werden. Die hohe Dichte insbesondere des verflüssigten Mediums erlaubt eine sehr effiziente und kompakte Speicherung. Dadurch wird die Wirtschaftlichkeit neuer Erschließungsmaßnahmen von Ortsenergieversorgungen z.B. von Städten und Gemeinden unabhängig von Importgas erheblich verbessert. Beispielsweise können eine oder mehrere Biogasanlagen so ihr lokales Umfeld versorgen. Insbesondere können typische jahreszeitliche Produktions- und Verbrauchsspitzen ausgeglichen werden und aus dem gespeicherten, insbesondere verflüssigten Medium, Strom beispielsweise dann produziert werden, wenn Wärme benötigt wird. Der Strom, bzw. die elektrische Energie, wird beim Betrieb der Entspannungsturbine generiert, während das entspannte Gas zu Heizzwecken eingesetzt werden kann.

Mit diesem System kann ebenso ein Tankstellennetz auf der Basis von Erdgastankstellen (CNG) oder Wasserstofftankstellen, wobei der Wasserstoff aus dem methanhaltigen Medium synthetisiert werden kann, aufbauen und somit die Infrastruktur flächendeckend im ländlichen Raum vorhalten und somit die Unabhängigkeit von Energieimporten reduzieren.

Gemäß einer vorteilhaften Ausgestaltung des Energieverbundsystems kann durch die Leitstelle elektrische Energie der mit dem elektrischen Energieversorgungsnetz gekoppelten Energiewandlereinrichtung über die Mehrzahl der Biogasanlagen und/oder über die Mehrzahl der Energiespeicher abhängig von einer verfügbaren Biogaserzeugungskapazität der Biogasanlagen und/oder verfügbaren Speicherkapazität bzw. eines betriebsrelevanten Zustands einer Vorrichtung zur Dichteerhöhung eines Mediums und/oder einer jeweiligen Speichereinrichtung in den Energiespeichern verteilbar sein. Derzeit sind beispielweise in Deutschland lediglich 0,04 TWh in Form von Pumpspeicherkraftwerken zur Stromspeicherung verfügbar, während bei einer Vollversorgung durch erneuerbare Energien eine fünfhundertfache Speicherkapazität notwendig wäre. Komprimiertes Gas und insbesondere verflüssigtes Gas können, wie oben ausgeführt wurde, erheblich höhere Speicherdichten ermöglichen.

Es ist denkbar, dass die Leitstelle die Energiespeicher und/oder Biogasanlage selektiv ansteuert. Eine Überlastung von einzelnen Biogasanlagen, die temporär wenig oder keine Energie aufnehmen können, kann vermieden werden.

Gemäß einer vorteilhaften Ausgestaltung des Energieverbundsystems kann ein Kommunikationssystem zur Übermittlung von Statusmeldungen der Energiespeicher zur Leitstelle vorgesehen sein, welches die Statusmeldungen an die Leitstelle übermittelt. Eine Überlastung von einzelnen Energiespeichern, die temporär wenig oder keine Energie aufnehmen können, oder der die Energiespeicher betreibenden Anlagen kann vermieden werden.

Gemäß einer vorteilhaften Ausgestaltung des Energieverbundsystems können die Energiespeicher dezentral und bevorzugt in unmittelbarer Nähe des Erdgasnetzes angeordnet sein, wobei gerade im ländlichen Bereich vorhandene Energiespeicher großräumig zusammengefasst werden können. Einzelne Energiespeicher können abhängig von betriebsrelevanten Parametern selektiv angesteuert werden, um das zu speichernde Medium aufzunehmen. Solche Parameter können z.B. eine Aufnahmekapazität des Energiespeichers, ein Betriebszustand der Vorrichtung zur Dichteerhöhung, eine Produktionskapazität der Vorrichtung zur Dichteerhöhung sein. Das Abrufen der gespeicherten Energie kann ebenso abhängig von derartigen Parametern sein, wie etwa eine Produktionskapazität der Entspannungsturbine, ein Betriebszustand der Entspannungsturbine und dergleichen. Ebenso kann eine Synthese von Wasserstoff aus Erdgas oder Biogas bedarfsabhängig erfolgen. Durch die räumliche Nähe zum Erdgasnetz kann eine Erdgas-Zuleitung und Erdgas-Ableitung, die in der Regel unter Hochdruck von bis zu 200 bar stehen, mit geringer Länge und hoher Einspeiseleistung vorgesehen sein, wobei Bau- und Wartungskosten für die relativ teure Erdgasleitung verringert werden können. Eine Einrichtung zur Druckerhöhung eines vom Energiespeicher in das Erdgasnetz zugeführten Gases bzw. zur Druckabsenkung von Erdgas aus dem Erdgasnetz zur Einspeicherung in den Energiespeicher kann vorteilhaft vorgesehen sein. Des Weiteren kann beispielsweise ein Überstromventil, dass als Ein-Wege Ventil beispielsweise gereinigtes und aufbereitetes Biogas bei Unterschreitung einer Steuerdruckgrenze zwischen Erdgasnetz und Biogas bzw. Gasausgang des Energiespeichers eine Zuführung von Gas in das Erdgasnetz vorteilhaft steuern.

Gemäß einer vorteilhaften Ausgestaltung des Energieverbundsystems kann zur Laststeuerung Biogas aus einer Mehrzahl von Biogasanlagen speicherbar, insbesondere verflüssigbar, sein und/oder gespeichertes Biogas verstrombar und in das elektrische Energieversorgungsnetz einspeisbar sein. Vorteilhaft können die Biogasanlagen dezentrale Biogasspeicher und/oder Wasserstoffspeicher (jeweils in flüssiger Form bei tiefen Temperaturen oder als Druckgas) bilden. Der Wasserstoff kann in der Biogasanlage aus dem Biogas synthetisiert werden. Damit kann beispielsweise eine Wasserstoffinfrastruktur verbessert werden, um beispielsweise Kraftfahrzeuge mit Wasserstoff als Treibstoff zu betanken. Denkbar ist jedoch auch, das jeweils gespeicherte Fluid (Biogas oder optional daraus gewonnener Wasserstoff) zu Sammelstellen zu transportieren, wo größere Mengen bereitgestellt und gegebenenfalls verbraucht werden können, etwa durch Verstromung des gespeicherten Biogases. Gemäß einer günstigen Ausgestaltung kann ein Kommunikationssystem zur Übermittlung von Statusmeldungen von Biogasanlagen zur Leitstelle vorgesehen sein.

Zweckmäßigerweise kann bei dem Energieverbundsystem elektrische Energie einer Energiewandlereinrichtung über die Mehrzahl der Energiespeicher abhängig von einer verfügbaren Kapazität einer Anlage zur Dichteerhöhung des Mediums und/oder einer jeweiligen Speichereinrichtung in den Biogasanlagen verteilbar sein. Damit lassen sich dezentrale Biogasanlagen leicht in das Energieverbundsystem integrieren. Eine Einspeisung der elektrischen Energie in einzelne Biogasanlagen erfolgt nach zweckmäßigen Kriterien, so dass die Energie optimal genutzt werden kann und wenig Energie ungenutzt verloren geht.

Gemäß einer vorteilhaften Ausgestaltung des Energieverbundsystems kann ein Kommunikationssystem zur Übermittlung von Statusmeldungen der Energiespeicher und/oder den Energiespeicher betreibende Einrichtungen zur Leitstelle vorgesehen sein, welches Statusmeldungen zur Leitstelle übermittelt. Biogasanlagen, die Gas oder Strom in weiträumige Versorgungsnetze einspeisen, sind üblicherweise bereits mit einer Leitstelle verbunden. Daher kann eine vorhandene Infrastruktur genutzt werden, die mit geringem Aufwand an die erhöhten Anforderungen angepasst werden kann.

Der Energiespeicher kann mit einem günstigen Verfahren betrieben werden, wobei zur Laststeuerung eines elektrischen Energieversorgungsnetzes und/oder eines Erdgasnetzes ein methanhaltiges Medium und/oder ein aus dem methanhaltigen Medium generiertes wasserstoffhaltiges Medium aus einem Biogasnetz bedarfsweise auf eine gegenüber Normalbedingungen erhöhte Dichte gebracht und im Energiespeicher gespeichert wird und/oder durch Entspannen des auf erhöhter Dichte befindlichen Mediums elektrische Energie aus dem Energiespeicher in das elektrische Energieversorgungsnetz und/oder nach Aufbereitung das Mediums in das Erdgasnetz geleitet werden, wobei elektrische Energie aus dem elektrischen Energieversorgungsnetz im Überkapazitätsfall zur Biogaserzeugung in der Biogasanlage und/oder zur Versorgung der Speichereinrichtung verwendet und das entstehende Biogas in den Energiespeicher eingespeist wird, und im Unterversorgungsfall aufbereitetes Biogas aus dem Energiespeicher in das Erdgasnetz eingespeist und elektrische Energie aus dem Energiespeicher in das elektrische Energieversorgungsnetz zurückgespeist wird.

Gemäß einer vorteilhaften Ausgestaltung des Verfahrens kann das zu speichernde Medium komprimiert werden. Alternativ kann gemäß einer vorteilhaften Ausgestaltung des Verfahrens das zu speichernde Medium, insbesondere Biogas durch Verflüssigen verdichtet werden, was eine sehr hohe Speicherdichte ermöglicht. Dies kann günstigerweise mittels einer Kältemaschine erfolgen. Besonders vorteilhaft ist das Verflüssigen durch Kühlen des Biogases mit Flüssigstickstoff. Die Energie der regenerativen elektrischen Energiewandlereinrichtung des elektrischen Versorgungsnetzes kann kontrolliert gespeichert und später bei Bedarf genutzt werden, insbesondere wenn Energie der Energiewandlereinrichtung nicht sinnvoll in einem Energieversorgungsnetz genutzt werden kann. Das Biogas kann zur Dichteerhöhung insbesondere verflüssigt werden und bei Bedarf sowohl zurückverstromt, innerhalb des Biogasnetzes bereitgestellt oder aufbereitet und gereinigt ins Erdgasnetz geleitet werden.

Es kann vorgesehen sein, dass eine Wahl der Methode zur Dichteerhöhung (d.h. Verflüssigung oder Kompression) getroffen wird in Abhängigkeit von einer Abschätzung, welche Methode aktuell energieeffizienter ist. Dies kann von mehreren Einflussparametern abhängen, beispielsweise die voraussichtliche Dauer und/oder Menge einer Einspeisung des elektrischen Stroms aus dem elektrischen Energieversorgungsnetz, der Kapazität der Anlage zur Dichteerhöhung, der Aufnahmekapazität der Speichereinrichtung und dergleichen. Die Abschätzung kann z.B. in einer übergeordneten Leitstelle oder auch in einer Kontrolleinrichtung z.B. in einer Biogasanlage vorgenommen und die Biogasanlage entsprechend angesteuert werden.

Gemäß einer vorteilhaften optionalen Ausgestaltung des Verfahrens kann eine Fermentereinrichtung einer Biogasanlage wenigstens zeitweise durch wenigstens eine elektrische Heizeinrichtung zur Unterstützung der Biogaserzeugung beheizt werden, welche von einer Energiewandlereinrichtung zur Versorgung mit elektrischer Energie versorgt werden kann, wobei die Dichte wenigstens ein Teils des Biogases, das durch die wenigstens zeitweise elektrische Beheizung erzeugt werden kann, erhöht und in einer Speichereinrichtung gespeichert werden kann. Durch die Dichteerhöhung, d.h. Verdichtung, des zusätzlichen Biogases kann dieses effizient gespeichert und zu einem späteren Zeitpunkt verwendet werden. Dadurch, dass die Dichteerhöhung des dem Speicher zuzuführenden Biogases wenigstens abhängig von einem Betriebszustand der elektrischen Heizeinrichtung erfolgt, können beispielsweise Leistungs- oder Energiespitzen aus regenerativen Energiequellen wie Windkraftanlagen oder Photovoltaikanlagen, die sich naturgemäß nicht regeln lassen, effizient gespeichert werden. Günstigerweise ist das der Speichereinrichtung zuzuführende Biogas Rohbiogas, das vor dem Speichern nicht weiter aufbereitet sein muss.

Gemäß einer günstigen Ausgestaltung kann vorteilhaft eine Gaszufuhr zu wenigstens einem internen Gasverbraucher in der Biogasanlage, der in Normalbetrieb mit Biogas versorgt wird, gesperrt werden, wenn die elektrische Heizeinrichtung bestromt wird. Der interne Gasverbraucher kann insbesondere ein Blockheizkraftwerk sein. Damit lässt sich die Menge der durch das zusätzlich erzeugte Biogas gespeicherten Energie der Energiewandlereinrichtung besonders leicht feststellen.

Gemäß einer vorteilhaften optionalen Ausgestaltung des Verfahrens kann eine Verbindung zu einem oder mehreren vom Biogas direkt oder indirekt versorgten Verbrauchern in der Biogasanlage gesperrt werden, wenn die elektrische Heizeinrichtung mit elektrischer Energie im Falle einer Beaufschlagung mit elektrischer Überlast durch die Energiewandlereinrichtung und das erzeugte Biogas vollständig in eine Speichereinrichtung geleitet und dort mit erhöhter Dichte gespeichert wird. Vorteilhaft ist die wenigstens eine elektrische Heizeinrichtung in einem Fermenter angeordnet und/oder in einem Heizkreislauf zur Beheizung eines Fermenters und/oder in einem Wärmetauscher zur Beheizung eines Fermenters und/oder in einem Wärmespeicher zur Beheizung eines Fermenters sowie optional auch für etwaige an die Biogasanlage angeschlossene Wärmeabnehmer. Vorteilhaft umfasst das Beheizen der Fermentereinrichtung die direkte oder indirekte Beheizung des umzusetzenden Inhalts der Fermentereinrichtung und/oder eine Beheizung von Rohstoffen, welche der Fermentereinrichtung zugeführt werden. Die Fermentereinrichtung kann einen oder mehrere Fermenter umfassen. Ein Fermenter ist ein Bioreaktor, in dem Mikroorganismen, Zellen und/oder Pflanzen unter definierten Bedingungen fermentiert werden, wobei methanhaltiges Biogas entsteht. Die Bedingungen beinhalten ein definiertes Temperaturfenster typischerweise zwischen 40°C und 50°C, das aufrechterhalten werden muss. Eine Biogasanlage benötigt auch im Sommer Energie zur Aufrechterhaltung der für die Funktion notwendigen Temperatur. Ein typisches Volumen eines Fermenters in gängigen Biogasanlagen kann beispielsweise bei 2000 m³ liegen, wobei häufig zwei oder mehr Fermenter in einer Biogasanlage vorgesehen sind.

Die Dichteerhöhung kann mittels Kompression des Biogases erfolgen, wobei das Biogas beispielsweise in einen Rohrspeicher gepresst werden kann, oder auch durch Verflüssigen des Biogases. Beim Komprimieren des Biogases als Druckgas kann auch ein mit der Biogasanlage gekoppeltes Gasversorgungsnetz bei entsprechendem Druckniveau wenigstens teilweise als Speicher mitgenutzt werden. In diesem Falle ist es zweckmäßig, das Biogas zu reinigen, bevor es dem Gasversorgungsnetz zugeführt wird. Dabei kann vorteilhaft die Dichteerhöhung abhängig von einem Betriebszustand der elektrischen Heizeinrichtung aktivierbar sein. Damit kann die selektive Speicherung von Biogas erfolgen, das mit elektrischer Energie der Energiewandlereinrichtung erzeugt wurde, welche nicht vom elektrischen Energieversorgungsnetz aufgenommen wurde. Auf diese Weise kann elektrische Energie gezielt auch über einen längeren Zeitraum aus dem Energieversorgungsnetz genommen werden. Ist absehbar, dass über einen längeren Zeitraum mehr elektrische Energie durch die Energiewandlereinrichtung erzeugt wird, als im Energieversorgungsnetz aufgenommen werden kann, kann die Biogasanlage für diese Zeit von einem Normalbetrieb in einen Speicherbetrieb überführt werden. So können zweckmäßigerweise ein oder mehrere Gasströme in der Biogasanlage abhängig von einem Betriebszustand der elektrischen Heizeinrichtung steuerbar sein. Im Speicherbetrieb können interne Verbraucher, wie etwa ein übliches Blockheizkraftwerk der Biogasanlage, abgeschaltet werden und das im Speicherbetrieb durch die direkt oder indirekt elektrisch beheizte Fermentereinrichtung generierte Biogas selektiv in der Speichereinrichtung gespeichert werden.

Dabei kann eine elektrische Heizeinrichtung innerhalb einer am Biogasnetz oder am Energiespeicher angeschlossene Biogasanlage mit elektrischer Energie beaufschlagt werden, wenn die Energiewandlereinrichtung eine elektrische Überlast liefert. Damit kann ein großräumiges elektrisches Energieversorgungsnetz schnell und sicher entlastet werden. Die Energiewandlereinrichtung ist bevorzugt dazu vorgesehen, Energie aus regenerativen Quellen in elektrische Energie zu verwandeln. Die Biogasanlage kann ansonsten autark arbeiten und elektrische und Wärmeenergie aus Biogas selbst erzeugen.

Es ist weiterhin vorteilhaft gespeichertes verdichtetes Biogas, z.B. verflüssigtes Biogas, zeitversetzt zur Erzeugung des Biogases im Normalbetrieb der Biogasanlage zum Verbrauch einzusetzen, d.h. zu verstromen, in Wärme umzuwandeln oder an das Gasnetz abzugeben. Damit gelingt eine indirekte Speicherung von elektrischer Energie, die aus regenerativen Energiequellen gewonnen wird, wobei Speicher- und Abgabezeitspannen voneinander entkoppelt sind.

Vorteilhafterweise kann aus dem einer Speichereinrichtung einer Biogasanlage oder des Energiespeichers zugeführten Biogas Wasserstoff synthetisiert werden. Der Wasserstoff kann als klimafreundlicher Treibstoff eingesetzt werden, der dezentral verfügbar gemacht werden kann. Eine Wasserstoffinfrastruktur kann somit verbessert werden.

### Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Figur 1: ein Ausführungsbeispiel eines Energiespeichers nach der Erfindung, der mit einer Biogasanlage gekoppelt ist;
- Figur 2: ein Ausführungsbeispiel eines Energiespeichers nach der Erfindung, der mit einem Erdgasnetz gekoppelt ist;
- Figur 3: ein Ausführungsbeispiel einer Biogasanlage mit Biogasspeichern nach der Erfindung welche als Stromspeicher eingesetzt sind; und
- Figur 4: ein Ausführungsbeispiel eines Verbundsystems mit Energiespeichern nach der Erfindung;
- Figur 5: ein Ausführungsbeispiel eines Energieverbundnetzes mit Energiespeicher;
- Figur 6: ein Erdgas-Lastprofil mit angeforderter Gasmenge mit Versorgungsengpass.

### Ausführungsformen der Erfindung

In den Figuren sind gleiche oder gleichartige Komponenten mit gleichen Bezugszeichen beziffert.

Üblicherweise erzeugt eine Biogasanlage aus dem in der Biogasanlage generierten Biogas Wärme und Elektrizität (insbesondere über ein Blockheizkraftwerk) für den Eigenbedarf. Überschüssiges Biogas kann im Normalbetrieb anderen Verbrauchern zur Verfügung gestellt werden, z.B. in ein Erdgasversorgungsnetz eingespeist werden. Biogasanlagen sind üblicherweise fern von Ballungszentren im ländlichen Bereich angesiedelt und verwenden aus Tierhaltung und Landwirtschaft anfallende Rohstoffe zur Generierung von Biogas.

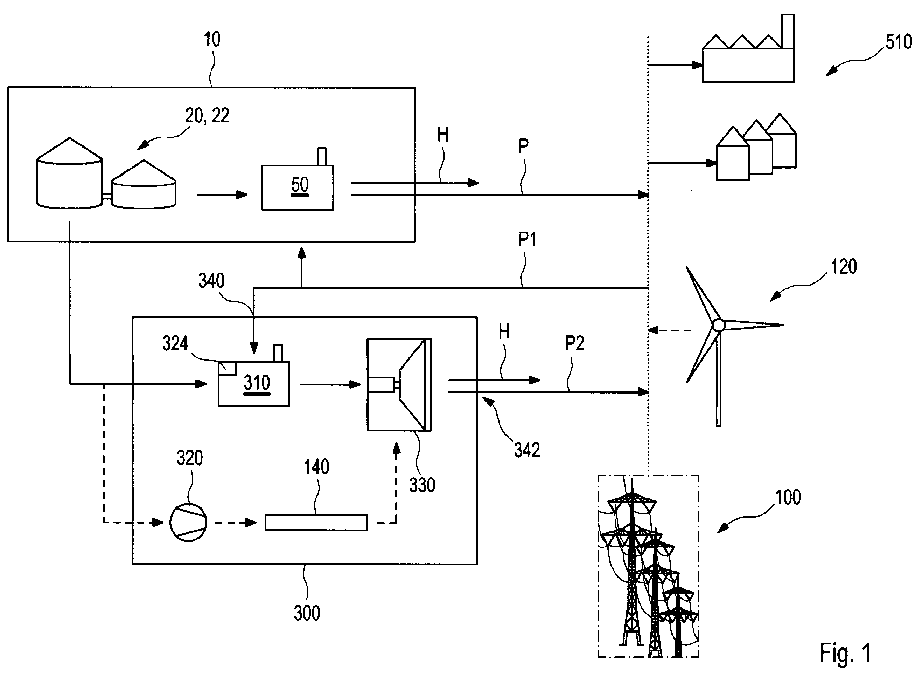

Figur 1 zeigt ein Ausführungsbeispiel eines Energiespeichers 300 nach der Erfindung zur Speicherung von Biogas als methanhaltigem Medium, der mit einer Biogasanlage 10 gekoppelt ist. Üblicherweise sind Biogasanlagen 10 in ländlichen Gebieten angesiedelt, z.B. in landwirtschaftlichen Betrieben fern von Ballungszentren mit zahlreichen Energieverbrauchern und dazu ausgelegt, im Wesentlichen den relativ geringen Energiebedarf vor Ort zu befriedigen und gegebenenfalls darüber hinaus aufbereitetes Biogas in ein Gasversorgungsnetz einzuspeisen und/oder Wärme für Verbraucher im näheren Umfeld bereitzustellen

Der Energiespeicher 300 umfasst in diesem Ausführungsbeispiel eine Speichereinrichtung 310 in Form eines Tanks für Flüssiggas und, optional, eine Speichereinrichtung 140, beispielsweise in Form eines Rohrspeichers für Biogas als methanhaltiges Medium, wobei die Speichereinrichtung 310 mit einer Vorrichtung 324 und die Speichereinrichtung 140 mit einer Vorrichtung 320 zur Erhöhung der Dichte wenigstens eines Teils des der jeweiligen Speichereinrichtung 310, 140 zuzuführenden Mediums (hier Biogas) gekoppelt ist. Der Speichereinrichtung 310 ist eine Verflüssigungseinrichtung 324 zugeordnet, die jedoch nicht gesondert ausgeführt ist. Die Speichereinrichtung 140 ist mit einem Kompressor 320 zum Komprimieren des Biogases gekoppelt..

Der Energiespeicher 300 weist einen Eingang 340 zum Einspeisen elektrischer Energie aus einem elektrischen Energieversorgungsnetz 100 in den Energiespeicher 300 auf und einen Ausgang 342 zum zeitverzögerten Abgeben elektrischer Energie aus dem Energiespeicher 300 in das elektrische Energieversorgungsnetz 100. Das elektrische Energieversorgungsnetz 100 ist z.B. eine überregional angelegte Energieversorgung mit Leitungsnetzen, an die eine oder mehrere Energiewandlereinrichtungen 120 angekoppelt sind. Die Energiewandlereinrichtung 120 kann insbesondere Energie aus regenerativen Energiequellen gewinnen, beispielsweise Windenergie, Solarenergie, Gezeitenenergie oder dergleichen, und in elektrischen Strom umwandeln. Elektrischer Strom aus derartigen Energiewandlereinrichtungen 120 ist auch als Grünstrom bekannt. Es können auch verschiedene Typen von Energiewandlern in der Energiewandlereinrichtung 120 kombiniert sein und elektrischen Strom für die Unterstützung der Biogaserzeugung bereitstellen sowie optional auch für etwaige an die Biogasanlage 10 angeschlossene Wärmeabnehmer.

Zur Biogaserzeugung aus einer Biorohmasse ist eine (vereinfacht dargestellten) Fermentereinrichtung 20 mit wenigstens einem Fermenter ausgestattet und mit einer Heizeinrichtung 22 zur Unterstützung der Biogaserzeugung gekoppelt. Die Heizeinrichtung 22 kann mit einem Blockheizkraftwerk 50 gekoppelt sein, oder optional mit elektrischer Energie betrieben werden, etwa als Elektrowärmetauscher, der Heizwasser erzeugt, welches über eine Heizwasserleitung 60 verschiedenartigen Verbrauchern zur Verfügung gestellt werden kann. Die Fermentereinrichtung 20 wird üblicherweise auf einer Betriebstemperatur zwischen 40°C und 50°C betrieben und kann z.B. durch Heizwasser der Heizeinrichtung 22 auf Temperatur gehalten werden.

Im Normalbetrieb der Biogasanlage 10 wird das Biogas dem lokalen Blockheizkraftwerk 50 zugeführt, das Wärme H und elektrische Leistung P für Verbraucher vor Ort oder gegebenenfalls externen Verbrauchern 510 zur Verfügung stellen kann.

Im Speicherbetrieb, beispielsweise aufgrund eines Steuerbefehls einer nicht dargestellten Leitstelle, versorgt die Fermentereinrichtung 20 den Energiespeicher 300 mit Biogas. Die eingespeiste elektrische Leistung P1 wird zur Erhöhung der Dichte des Biogases verwendet, insbesondere zur Kompression oder zur Verflüssigung desselben. Das Biogas weist dann eine erheblich höhere Dichte auf als unter Normalbedingungen bei Umgebungstemperatur und Umgebungsdruck oder leicht erhöhtem Betriebsdruck.

Soll vom Energiespeicher 300 wieder elektrische Leistung P2 in das elektrische Energieversorgungsnetz 100 zurückgespeist werden, kann das komprimierte Biogas über eine Entspannungsturbine 330 entspannt werden, wobei die Entspannungsturbine 330 elektrischen Strom generiert. Das verflüssigte Biogas wird aufgewärmt, wobei sich ein hoher Druck ausbildet, der dann entsprechend die Entspannungsturbine 330 antreibt. Das entspannte Biogas kann über ein nicht dargestelltes Blockheizkraftwerk oder über das Blockheizkraftwerk 50 Strom und Wärme liefern oder bedarfsweise auch in ein nicht dargestelltes lokales oder überregionales Gasversorgungsnetz eingespeist werden.

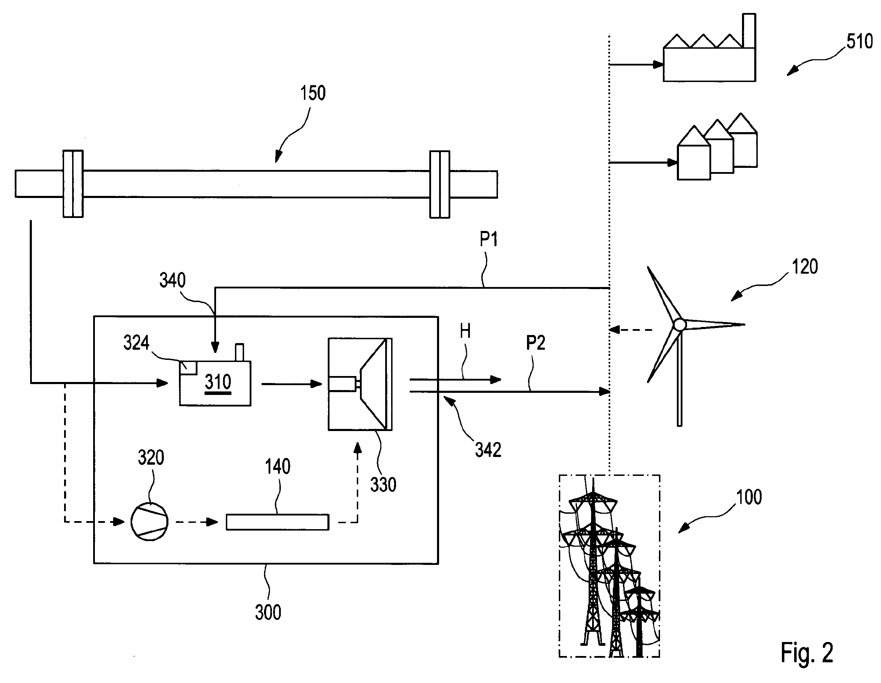

Figur 2 zeigt ein Ausführungsbeispiel eines Energiespeichers 300 nach der Erfindung, der mit einem Gasversorgungsnetz 150 gekoppelt ist, welches Erdgas, d.h. nahezu reines Methan, führt.

Der Aufbau des Energiespeichers 300 entspricht im Wesentlichen dem des Ausführungsbeispiels in Figur 1. Die Versorgung des Energiespeichers 300 bzw. von dessen Speichereinrichtungen 310, 140 erfolgt jedoch durch das Gasversorgungsnetz 150, das Erdgas mit Betriebsdruck anliefert, welches dann auf eine höhere Dichte komprimiert oder verflüssigt werden kann. Durch die dem Energiespeicher 300 zugeführte elektrische Energie P1 aus dem elektrischen Energieversorgungsnetz kann das Erdgas komprimiert oder verflüssigt werden. Zum Zurückspeisen von elektrischer Energie P2 in das elektrische Energieversorgungsnetz 100 kann die Entspannungsturbine 330 das Erdgas auf eine im Vergleich zum Speicherzustand geringere Dichte entspannen und dabei elektrische Energie P2 an das elektrische Energieversorgungsnetz 100 abgeben.

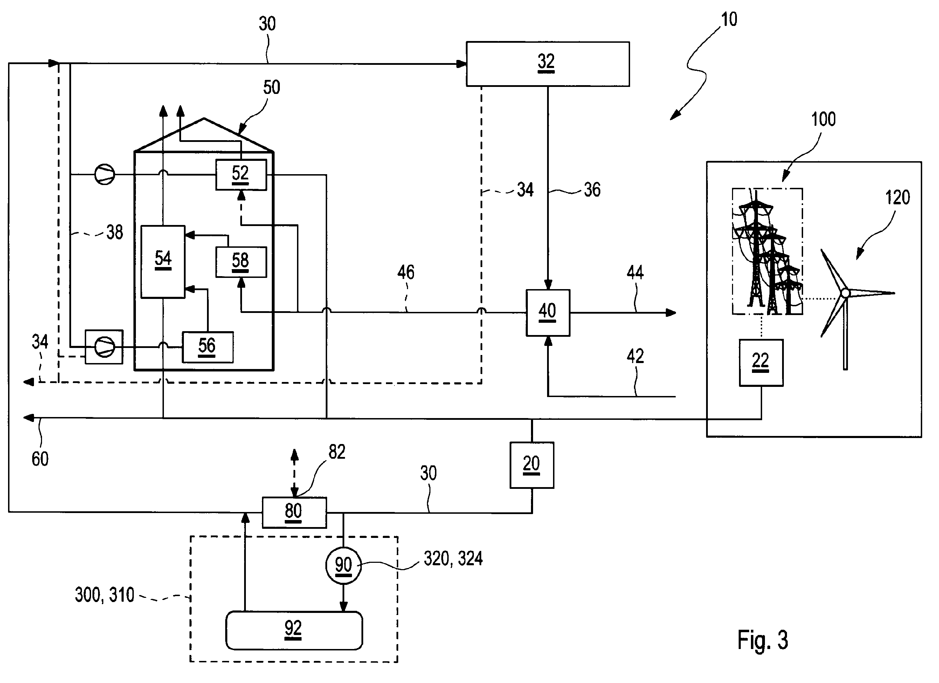

Figur 3 stellt ein optionales Ausführungsbeispiel einer Biogasanlage 10 mit einer Speichereinrichtung 310 für Biogas nach der Erfindung. Die Biogasanlage 10 ist nur grob dargestellt und die wesentlichen Elemente im Folgenden beschrieben. Komponenten wie Messeinrichtungen zur Erfassung von Gasmengen und/oder erzeugter oder verbrauchter elektrischer Energie sind nicht dargestellt, können jedoch an geeigneten Positionen angeordnet sein.

Wie schon bei Figur 1 beschrieben wurde, ist zur Biogaserzeugung aus einer Biorohmasse eine (vereinfacht dargestellten) Fermentereinrichtung 20 mit wenigstens einem Fermenter ausgestattet. Vorteilhaft kann diese mit einer Heizeinrichtung 22 zur Unterstützung der Biogaserzeugung gekoppelt sein. Die Heizeinrichtung 22 kann optional mit elektrischer Energie betreibbar und beispielsweise als Elektrowärmetauscher ausgeführt sein, der Heizwasser erzeugt, mit dem die Fermentereinrichtung 20 auf ihrer üblichen Betriebstemperatur zwischen 40°C und 50°C gehalten werden kann.

Im Normalbetrieb der Biogasanlage 10 wird das Biogas einem lokalen Blockheizkraftwerk 50 zugeführt, das Wärme und elektrische Leistung für Verbraucher vor Ort oder gegebenenfalls externen Verbrauchern 510 zur Verfügung stellen kann. Gemäß einer günstigen Ausgestaltung kann vorteilhaft eine Gaszufuhr zu wenigstens einem internen Gasverbraucher in der Biogasanlage 10, der in Normalbetrieb mit Biogas versorgt wird, gesperrt werden, wenn die elektrische Heizeinrichtung 22 bestromt wird. Der interne Gasverbraucher kann insbesondere ein Blockheizkraftwerk 50 sein. Damit lässt sich die Menge der durch das zusätzlich erzeugte Biogas gespeicherten Energie der Energiewandlereinrichtung 120 besonders leicht feststellen.

Die elektrische Heizeinrichtung 22 kann vor allem dann mit elektrischer Energie beaufschlagt werden, wenn die Energiewandlereinrichtung 120 dem elektrischen Energieversorgungsnetz 100 eine elektrische Überlast liefert. Damit kann ein großräumiges elektrisches Energieversorgungsnetz 100 schnell und sicher entlastet werden. Die Energiewandlereinrichtung 120 ist bevorzugt dazu vorgesehen, Energie aus regenerativen Quellen in elektrische Energie zu verwandeln. Die Biogasanlage 10 kann ansonsten autark arbeiten und elektrische und Wärmeenergie aus Biogas selbst erzeugen.

Bei einer Anlage, die Biogas in ein (nicht dargestelltes) Gasversorgungsnetz einspeist, wird das entstandene Rohbiogas über eine Leitung 30 einer Gasaufbereitungsanlage 32 zugeführt. Auskondensierendes Wasser aus der Leitung 30 und der Gasaufbereitungsanlage 32 wird über eine Kondensatsammelleitung 34 abgeführt. Das aufbereitete Biogas wird über eine Leitung 36 einer Gasmischeinrichtung 40 zugeführt und dort beispielsweise mit Erdgas (zugeführt über Eingangsleitung 42) gemischt und dem Gasversorgungsnetz über Leitung 44 zugeführt.

Ferner ist eine Einrichtung zur Erzeugung von elektrischer Energie und/oder Wärmeenergie 52 in Form eines Blockheizkraftwerks vorgesehen, dem Rohbiogas zugeführt wird. Das Blockheizkraftwerk 52 (Einrichtung zur Erzeugung von elektrischer Energie und/oder Wärmeenergie) ist z.B. in einem Maschinenhaus 50 angeordnet, in dem ferner ein Abgaswärmetauscher 54 angeordnet ist sowie ein erster Brenner 56, der mit Rohbiogas aus einer Leitung 38 beschickt wird und ein zweiter Brenner 58, der mit einer Mischung aus aufbereitetem Biogas und Erdgas aus der Gasmischeinrichtung 40 (über Leitung 46) versorgt wird.

Ferner ist wenigstens eine Speichereinrichtung 310 eines Energiespeichers 300 zum Speichern von Biogas vorgesehen, der mit einer Anlage 90 zur Dichteerhöhung wenigstens eines Teils des der Speichereinrichtung 310 zuzuführenden Biogases gekoppelt ist. Die Anlage 90 kann einen Kompressor 320 zum Komprimieren und/oder eine Kältemaschine 324 zur Verflüssigung des Biogases umfassen. Vorzugsweise erfolgt die Speicherung des Biogases nicht im Normalbetrieb der Biogasanlage 10, in dem diese praktisch autark arbeitet, sondern dann, wenn elektrische Energie aus dem elektrischen Energieversorgungsnetz 100 eingespeist werden soll. Diese kann in Form von Biogas gespeichert werden, insbesondere in verflüssigter Form bei kryogenen Temperaturen. Optional können auch an die Biogasanlage 10 angeschlossene Wärmeabnehmer mit der überschüssigen elektrischen Energie versorgt werden, beispielsweise elektrisch beheizt werden.

Im gezeigten Ausführungsbeispiel kann die Anlage 90 beispielsweise einen Wärmetauscher, der als Kühlmittel Flüssigstickstoff aufweist, mit dem das zugeführte Biogas verflüssigt wird. Die Temperatur des Flüssigstickstoffs liegt bei Normalbedingungen bei -196°C (77 K). Die Speichereinrichtung 310 weist wenigstens einen Speichertank 92 auf, der entsprechend für kryogene Temperaturen ausgelegt ist, um das verflüssigte Biogas über entsprechende Zeiträume, z.B. Stunden oder Tage, in flüssigem Zustand zu lagern.

Vor der Biogasaufbereitung besteht das Biogas aus einer wassergesättigten Mischung von Hauptkomponenten Methan (CH4) und Kohlendioxid (CO2). In Spuren können auch Stickstoff (N2), Sauerstoff (02), Schwefelwasserstoff (H2S), Wasserstoff (H2) und Ammoniak (NH3) enthalten sein. Bei Normalbedingungen siedet Methan bei -161,7°C, während Sauerstoff bei -182,97°C, Ammoniak bei 33°C siedet und bei -77,7°C kondensiert und Schwefelwasserstoff bei -60,20°C siedet und bei -85,7°C kondensiert. Kohlendioxid fällt bei -78,48°C als Trockeneis aus. Damit lässt sich der wesentliche Bestandteile des Biogases (Methan) verflüssigen. Die bei höheren Temperaturen als Methan auskondensierenden Bestandteile können gegebenenfalls entfernt werden, womit eine effektive Gasreinigung möglich ist. Dabei können die Fremdbestandteile beim Abkühlen und/oder auch beim späteren Erwärmen vom Methan getrennt werden. Daher kann für dieses durch Verflüssigung gereinigte Methan auf eine Gasaufbereitung in der Gasaufbereitungsanlage 32 verzichtet werden. Das gereinigte Methan kann dem Gasversorgungsnetz direkt zugeführt werden. Gegebenenfalls kann es in der Gasmischeinrichtung 40 oder einer anderen geeigneten Vorrichtung auf den gewünschten Druck im Gasversorgungsnetz verdichtet werden.

Die Speichereinrichtung 310 kann das gespeicherte Biogas zu einem späteren Zeitpunkt wieder der Biogasanlage 10 zur Verfügung stellen. Denkbar ist auch, bei Bedarf das verdichtete und/oder verflüssigte Biogas an andere Verbrauchsorte zu transportieren und dort zu verbrauchen.

Eine Leitvorrichtung 80 ist in der Biogas-Leitung 30 so angeordnet, dass das Biogas aus der Fermentereinrichtung 20 über die Anlage 90 in die Speichereinrichtung 310 gelangen kann, wenn die Leitvorrichtung 80 die Leitung 30 sperrt. Alternativ ist denkbar, dass die Leitvorrichtung 80 einen ersten Volumenstrom von Biogas in die Speichereinrichtung 310 leitet und einen zweiten Volumenstrom von Biogas zur Gasaufbereitungsanlage 32. In diesem Fall kann Biogas beispielsweise verstromt werden, um elektrische Komponenten der Anlage 90 zu betreiben, etwa Pumpen und dergleichen.

Die Leitvorrichtung 80 kann abhängig von einem Betriebszustand der elektrischen Heizeinrichtung 22 betreibbar sein kann. Dies hat den Vorteil, dass ein Gasfluss des überschüssigen Biogases gezielt umgeleitet werden kann und nicht in die weiteren Anlagenteile der Biogasanlage 10 gelangt (beispielsweise das Blockheizkraftwerk 50). Das Biogas kann im Speicherbetrieb in gewünschter Menge, beispielsweise vollständig, in die Speichereinrichtung 310 geleitet werden. Die Leitvorrichtung 80 kann ein Absperrventil umfassen, um bei einem gegebenen Betriebszustand der elektrischen Heizeinrichtung 22 das Biogas ausschließlich in die Anlage 90 zu leiten. Die überschüssige Energie der Energiewandlereinrichtung 120 kann damit sehr ökonomisch gespeichert werden. Ferner ist leicht festzustellen, welche elektrische Energiemenge von der Energiewandlereinrichtung 120 letztendlich als Biogas in die Speichereinrichtung 310 gelangt ist. Sowohl die in die elektrische Heizeinrichtung 22 eingespeiste elektrische Energie als auch die Menge des damit erzeugten Biogases können mit hoher Genauigkeit erfasst und bewertet werden.

Arbeitet die Energiewandlereinrichtung 120 unter Normalbedingungen bzw. kann die erzeugte Energie vollständig an ein symbolisch dargestelltes elektrisches Energieversorgungsnetz 100 übergeben werden, gibt die Leitvorrichtung 80 die Leitung 30 frei, und das Rohbiogas kann von der Fermentereinrichtung 20 zum Blockheizkraftwerk 52 und den weiteren Komponenten im Maschinenhaus 50 und zur Gasaufbereitungsanlage 32 mit der nachgeschalteten Gasmischeinrichtung 40 gelangen. Im Falle von verflüssigtem und daher gereinigtem Biogas kann die Gasaufbereitungsanlage 32 umgangen werden.

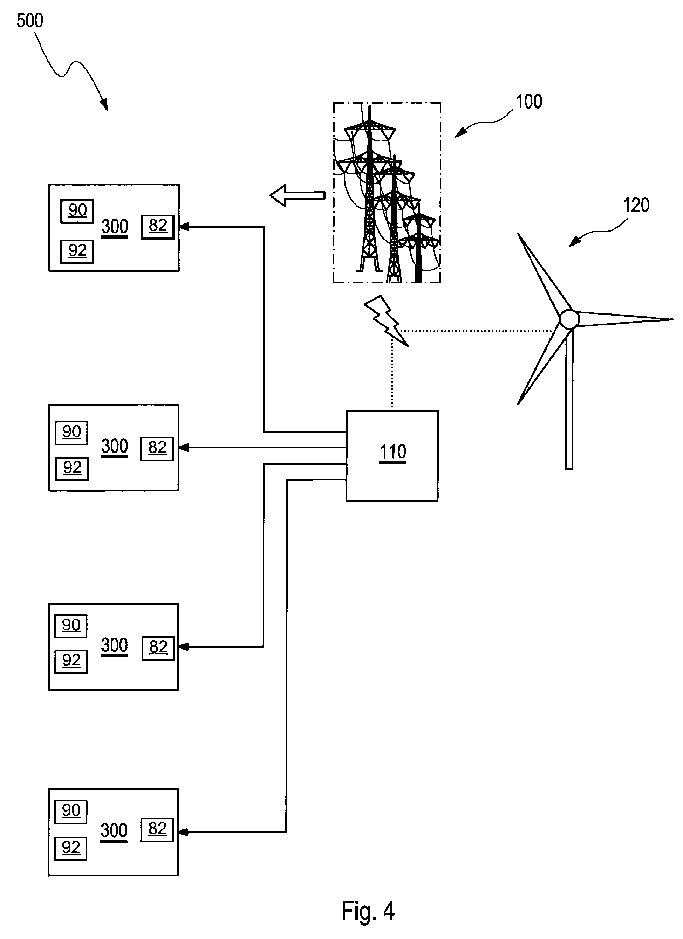

Die Leitvorrichtung 80 weist zweckmäßigerweise eine Schnittstelle 82 auf, mit der eine Kommunikation mit einem Verbundsystem von Biogasanlagen 10 möglich ist. Dies ist in Figur 4 dargestellt. Eine Reihe von dezentral, insbesondere im ländlichen Raum angeordnete Biogasanlagen 10 sind miteinander über die Leitstelle 110 zu einem Verbundsystem 500 gekoppelt. Die Zahl der Biogasanlagen 10 kann beispielsweise einige zehn bis mehrere hundert betragen.

Die Datenschnittstelle 82 kann eine Aufnahmekapazität der Speichereinrichtung 310 oder eine Kapazität der Anlage 90 zur Dichteerhöhung an eine Leitstelle 110 übermitteln. Die Leitstelle 110 kann die Biogasanlagen 10 selektiv ansteuern und je nach Füllstand der Speichereinrichtung 310 und/oder der Anlage 90 die elektrische Energie innerhalb des Verbundsystems verteilen. Ein Kommunikationssystem zur Übermittlung von Statusmeldungen von Biogasanlagen 10 zur Leitstelle 110 vorgesehen ist.

Figur 4 zeigt ein Ausführungsbeispiel eines Verbundsystems 500 mit einer Mehrzahl von Energiespeichern 300 nach der Erfindung. Die Energiespeicher 300 sind wenigstens zeitweise zur Laststeuerung eines elektrischen Energieversorgungsnetzes 100 eingesetzt, das mit wenigstens einer Energiewandlereinrichtung 120 gekoppelt ist. Elektrische Energie ist aus einem elektrischen Energieversorgungsnetz 100 oder mehrere der Energiespeicher 300 einspeisbar und zeitverzögert elektrische Energie aus dem Energiespeicher 300 in das elektrische Energieversorgungsnetz 100 zurückspeisbar. Die Speichereinrichtung des Energiespeichers 300 ist mit einer Vorrichtung zur Erhöhung der Dichte wenigstens eines Teils des der Speichereinrichtung zuzuführenden Mediums, etwa Erdgas oder Biogas, gekoppelt.

Elektrische Energie der mit dem elektrischen Energieversorgungsnetz 100 gekoppelten Energiewandlereinrichtung 120 kann über die Mehrzahl der Energiespeicher 300 abhängig von einer verfügbaren Kapazität einer Vorrichtung zur Dichteerhöhung des Mediums und/oder einer jeweiligen Speichereinrichtung in den Energiespeichern 300 verteilbar sein. Hierzu ist vorteilhaft eine Leitstelle 110 vorgesehen, welche die Energiespeicher 300 selektiv ansteuern kann. Ebenso kann ein Rückspeisen der elektrischen Leistung in das elektrische Energieversorgungsnetz 100 gesteuert oder geregelt erfolgen.

Zweckmäßigerweise ist ein Kommunikationssystem zur Übermittlung von Statusmeldungen der Energiespeicher 300 zur Leitstelle 110 vorgesehen.

In einem zeichnerisch nicht dargestellten Ausführungsbeispiel ist die Speichereinrichtung 92 mit einem Reaktor zur Wasserstoffgewinnung gekoppelt, so dass aus dem gespeicherten Biogas Wasserstoff synthetisiert werden kann, etwa durch Reformierung, partielle Oxidation oder andere bekannte Verfahren. Das verflüssigte Biogas eignet sich hierfür besonders, da durch die Verflüssigung Methan in hoher Reinheit vorliegt. Der aus dem Biogas gewonnene Wasserstoff kann beispielsweise in der Speichereinrichtung 92 gespeichert werden und etwa als Kraftstoff für Wasserstofffahrzeuge verbraucht werden.

Zur Laststeuerung des elektrischen Energieversorgungsnetzes 100 ist vorteilhaft Biogas aus einer Mehrzahl von Biogasanlagen 10 speicherbar, insbesondere verflüssigbar, und/oder gespeichertes Biogas verstrombar und in das elektrische Energieversorgungsnetz 100 einspeisbar.

Das Verbundsystem 500 des Energieverbundsystems 600 ermöglicht eine bidirektionale Kopplung von elektrischem Energieversorgungsnetz und/oder Gasversorgungsnetz, wobei z.B. Biogasanlagen 10 zur Laststeuerung des elektrischen Energieversorgungsnetzes 100 dienen können. Fällt mehr elektrische Energie bzw. Leistung an, als das Stromversorgungsnetz 100 aufnehmen kann, werden eine oder mehrere Biogasanlagen 10 insofern auf lokalen Betrieb geschaltet, als diese keine elektrische Energie mehr an ein etwaiges angeschlossenes elektrisches Energieversorgungsnetz 100 (Stromnetz) und insbesondere an die jeweilige Fermentereinrichtung der Biogasanlagen 10 liefern, sondern die Fermentereinrichtung mit der überschüssigen elektrischen Energie elektrisch beheizt wird und das generierte Biogas gespeichert wird, insbesondere in flüssiger Form. Wird zu einem späteren Zeitpunkt Strom oder Wärme benötigt, kann das gespeicherte Biogas verstromt werden und der elektrische Strom z.B. in das elektrische Energieversorgungsnetz 100 zurückgespeist werden.

Die Energiewandlereinrichtung 120 ist vorzugsweise eine Energieerzeugungsanlage mit mehr als 100 kWh, insbesondere eine Energieerzeugungsanlage aus regenerativen Energiequellen, beispielsweise eine Windkraftanlage mit einer Mehrzahl von Windkrafträdern, ein Windpark, eine Photovoltaikanlage, oder einer sonstigen Anlage zur Erzeugung von "Grünstrom".

Die Energiewandlereinrichtung 120 versorgt vorzugsweise ein Energieversorgungsnetz 100, das großräumig, beispielsweise über mehrere Bundesländer angelegt ist. Insbesondere kann die Energiewandlereinrichtung 120 weit entfernt von den Biogasanlagen 10 angeordnet sein.

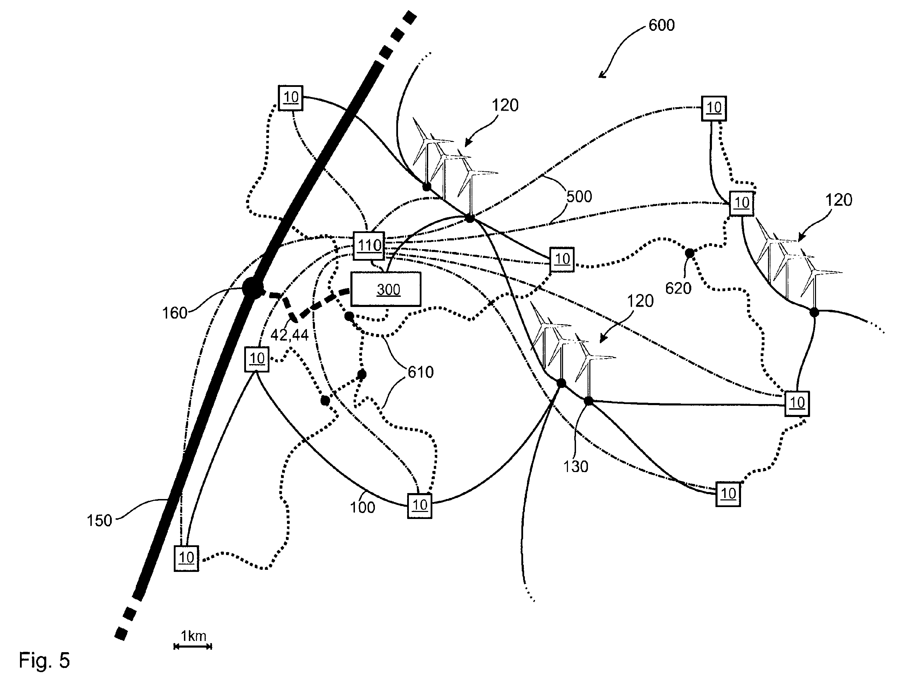

In der Fig. 5 ist ein Ausführungsbeispiel eines Energieverbundsystems 600 dargestellt. Das Energieverbundsystem 600 umfasst ein ErdgasVersorgungsnetz 150 (dicke Linie), wobei lediglich eine einzelne Erdgas-Versorgungstrasse zur Hochdruck-Erdgasversorgung einer großen Anzahl von Verbrauchern dargestellt ist. Des weiteren ist ein elektrisches Energieversorgungsnetz 100 (dünne Linien) dargestellt, dass zur elektrischen Versorgung von Haushalten, Industrieanlagen und weiterer Einrichtungen mit elektrischem Strom dient. An dem elektrischen Energieversorgungsnetz 100 sind mehrere Windkraftanlagen als Beispiel regenerativer Energiewandlereinrichtungen 120 über elektrische Netzverteilpunkte 130 angeschlossen, die Grünstrom in das Netz 100 einspeisen. Daneben ist ein lokales Biogasnetz 610 (punktierte Linien) umfasst, an dem zumindest eine Biogasanlage 10, in diesem Fall mehrere Biogasanlagen 10, zur Produktion und Einspeisung von Biogas angeschlossen sind. An dem Biogasnetz 610 können auch einzelne, nicht dargestellte Biogasverbraucher, z.B. landwirtschaftliche Anlagen, an Biogasnetzverteilpunkten 620 angeschlossen sein. Im Biogasnetz 610 ist zumindest ein Energiespeicher 300 zur Speicherung von Biogas vorgesehen. In diesem Ausführungsbeispiel ist der Energiespeicher 300 als zentraler Energiespeicher 300 vorgesehen. Da das Biogasnetz 610 mit einem deutlich geringeren Gasdruckniveau als das Erdgasnetz 150 betrieben wird, ist vorteilhafterweise zwischen Energiespeicher 300 und Erdgasnetz 150 eine Druckerhöhungseinrichtung für die Zuführung von methanangereichtes Gas in das Erdgasnetz 150 bzw. vorteilhaft eine Drucksenkungseinrichtung für die Erdgaszuführung in das Biogasnetz 610 vorzusehen. Der Energiespeicher 300 kann ein Druckgas- oder Flüssigkeitsspeicher, ein Porenspeicher, d.h. ehemaliges Erdgasfeld, ein Kavernenspeicher, d.h. ein Salzstock, ein Kaskadentankspeicher oder ein sonstiger Fluidspeicher sein. Der Energiespeicher 300 ist mit einer bidirektionalen Leitung 42, 44 mit dem Erdgasnetz 150 verbunden und verfügt somit über eine Verbindung sowohl zu lokalem Biogasnetz 610 als auch überregionalen Erdgasnetz 150. Lokales Biogasnetz 610 und überregionales Erdgasnetz 150 sind über den zentralen Energiespeicher 300 miteinander verbunden. Der Energiespeicher 300 kann Teil einer Biogasanlage 10 sein oder isoliert betrieben werden. Der Energiespeicher 300 kann eine Einrichtung zur Erzeugung von elektrischer Energie und/oder Wärmeenergie 52 in Form eines Blockheizkraftwerks umfassen, um gespeichertes Biogas in das elektrische Energieversorgungsnetz 100 zurück zu speisen oder Fernwärme bereit zu stellen. Der Energiespeicher 300 kann Biogas einer lokalen Biogasanlage 10 oder aus dem Biogasnetz 610 unter Druck speichern, insbesondere verflüssigt speichern. Der Energiespeicher 300 kann entsprechend gereinigtes Biogas, insbesondere durch Druckwechsel-Adsorption oder durch Verflüssigung gereinigtes Biogas mit einem entsprechend hohen Methangehalt durch die Leitung 44 in das Erdgasnetz 150 speisen. Alternativ kann der Energiespeicher 300 Erdgas über die Leitung 42 aufnehmen und einspeichern, beispielsweise um die Biogasanlage(n) 10 mit darin befindlichen Blockheizkraftwerken mit Erdgas zu versorgen, z.B. falls ein Engpass in der Biogasproduktion entsteht. Entsprechende Filtereinrichtungen und Ventileinrichtungen sind in der Verbindungsleitung 42,44 beispielsweise im Energiespeicher 300 oder an dem Erdgas-Netzverteilpunkt 160 angeordnet.

Schließlich umfasst das Energieverbundsystem 600 eine Leitstelle 110 eines Verbundsystems 500 (strich-punktierte Linien), dass die einzelnen Biogasanlagen 10, elektrische Energiewandlereinrichtungen 120 und zumindest die eine Biogas-Speichereinrichtung 300 steuernd miteinander verbindet. Die Leitstelle 110 kann aktuell erzeugtes Aufkommen an Grünstrom erfassen, bzw. durch Wind- und Wetterprognosen vorausberechnen, kann eine Aufnahmekapazität der zentralen Speichereinrichtungen 300 oder in den Biogasanlagen 10 verteilten dezentralen Speichereinrichtungen 300 erfassen, eine Biogasproduktionskapazität in den Biogasanlagen 10 erfassen und kann die Versorgungssituation in dem Erdgasversorgungsnetz 150 bestimmen.

In Abhängigkeit des Aufkommens von Grünstrom im Verhältnis zum aktuellen elektrischen Energieverbrauch, beispielsweise bei Überschreitung einer vorbestimmbaren Netznennspannung, einer ungünstigen Veränderung der Netzfrequenz oder einem Lastabwurf einer elektrischen Verteilstelle, beispielsweise einem Umspannwerk oder einer Netzzentrale, kann die Leitstelle 110 eine Produktion von Biogas durch die Biogasanlagen 10 aktivieren. So kann überschüssiger regenerativ erzeugter Strom, beispielsweise bei starkem Windaufkommen oder hoher Sonneneinstrahlung in Form von Biogas in der oder den Speichereinrichtungen 300 eingespeichert werden. Im Fall von Stromknappheit kann gespeichertes Biogas des Biogasnetzes 610 in Blockheizkraftwerken 52 rückverstromt werden.

Daneben kann unter Druck gespeichertes, oder verflüssigtes Erdgas des Biogasnetzes 610, das in einer zentralen Speichereinrichtung 300 oder in Speichereinrichtungen 300 der einzelnen Biogasanlagen 10 sowie in Gasspeicherreserven des Biogasnetzes 610 gespeichert ist, im Fall eines Erdgas-Versorgungsengpass durch die Leitung 44 in das Erdgasnetz 150 eingespeist werden. Somit kann im Fall unerwartet hohen Erdgasverbrauchs, d.h. bei Absinken des Erdgasdrucks unter einen vorbestimmbaren Wert, durch Zumischung von gereinigtem Biogas mit hohem Methangehalt eine Gasversorgung aufrecht erhalten bleiben. Vorteilhaft können insbesondere Engpässe bei der Transportkapazität im Erdgasnetz 150 ausgeglichen werden.

Es ist auch denkbar, dass im Falle eines niedrigen Biogasaufkommens Erdgas aus dem Erdgasnetz 150 durch die Leitung 42 entnommen und in der Speichereinrichtung 300 gespeichert werden, um eine Versorgung von am Biogasnetz 610 angeschlossene Verbraucher aufrecht zu erhalten. Auch kann das gespeicherte Erdgas in der Speichereinrichtung 300 oder im Biogasnetz 610 gepuffert und bei Bedarf, d.h. einer Unterversorgung in das Erdgasnetz 150 zurückgespeist werden.

Somit ist ein Energieverbundsystem 600 bestehend aus einem lokalen Biogasnetz 610, einem überregionalen Erdgasnetz 150 und einem mit regenerativ erzeugten Strom versorgtem Stromnetz 100 vorgeschlagen, in dem eine Leitstelle 110 eine Produktion und Speicherung von Biogas in Abhängigkeit von zur Verfügung stehenden Grünstrom und/oder Erdgas veranlassen kann, wobei das gespeicherte Biogas zur Rückverstromung in das elektrische Versorgungsnetz 100 oder Einleitung in das Erdgasnetz 150 genutzt werden kann.

Das Verbundsystem 500 kann drahtgebunden oder drahtlos, beispielsweise über Internet oder Mobilfunknetz Zustands- und Prognosedaten der einzelnen Komponenten des Energieverbundsystems erhalten und Steuerbefehle zur Aktivierung einer Biogasproduktion einer Biogasanlage 10, einer Druckspeicherung oder Gasausgabe des Energiespeichers 300, einer Gaszuleitung ins Erdgasnetz 150, einer Stromproduktion aus gespeichertem Gas des Erdgasspeichers 300 oder andere Energietransferaktionen zwischen Gas-Biogas- und Stromnetz ausgeben. Biogas kann in Strom-Schwachlastzeiten inkrementell über einen langen Zeitraum erzeugt und in der Speichereinrichtung 300 gespeichert, und im Fall einer Erdgasunterversorgung in hohen Mengen und hohem Druck in kurzer Zeit zur Überbrückung eines Gasengpasses in das Erdgasnetz 150 eingespeist werden. Somit kann im typischen Fall eines Lastabwurfs regenerativer Stromquellen, während der eine Überkapazität an Strom besteht, der Strom in Biogas durch Betrieb einer oder mehrerer Biogasanlagen gespeichert werden, und das gespeicherte Biogas entweder zurückverstromt, in Wärmeenergie umgewandelt werden, oder nach einer entsprechenden Aufbereitung für ein Erdgasnetz zur Verfügung gestellt werden. Vorteilhaft werden von der Leitstelle 110 Biogasanlagen 10 in räumlicher bzw. netztopologischer Nähe zur regenerativen Energiewandlereinrichtung 120 aktiviert, um einen Überlast des Stromnetzes 100 zu begrenzen bzw. die Überlast in Bereiche des Stromnetzes zu verteilen, die ausreichend Stromweiterleitungskapazitäten aufweisen.

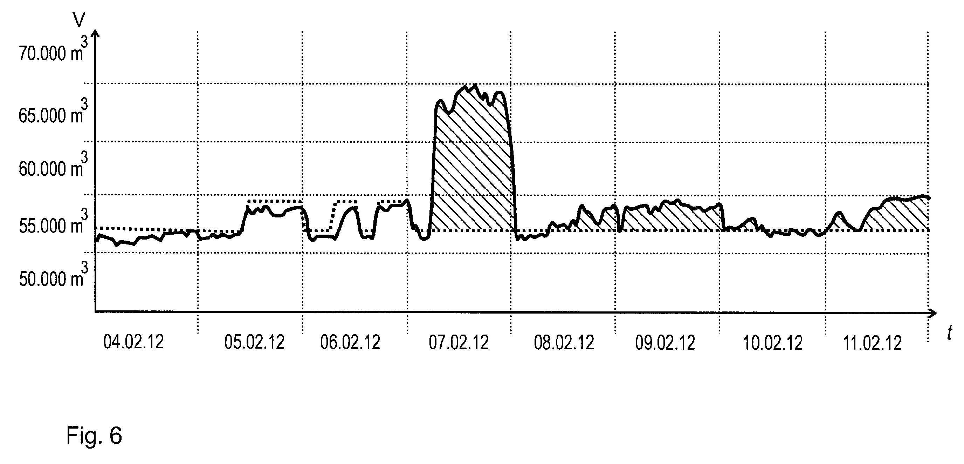

In der Fig. 6 ist für einen Zeitraum vom 4. Februar bis 11. Februar 2012 ein Lastgang des Gasverbrauchs für eine Region in Deutschland, dargestellt. Punktiert ist die Menge an Gas dargestellt, die im überregionalen Erdgasnetz 150 zur Versorgung dieser Region planmäßig angefordert wurde, und als durchgezogener Graph die tatsächlich verbrauchte Menge aufgezeichnet. Hierbei ergab sich schraffiert dargestellt insbesondere am 07.02.2012 aufgrund eines unerwarteten Kälteeinbruchs mit sehr tiefen Temperaturen eine erhebliche Fehlgasmenge, die schraffiert dargestellt ist. Auch in den Folgetagen konnte das Erdgasnetz 150 nicht den gesamten Erdgasbedarf decken. In Folge des Gasengpasses aufgrund der wetterbedingten Störung wurde zur Sicherstellung der Gasversorgung von Wohnhäusern die Gaszufuhr für Großverbraucher wie Gaskraftwerke und ausgewählte Industrieanlagen reduziert, um anhand einer Prioritätsreihenfolge den verschiedenen Verbrauchergruppen Gas zur Verfügung zu stellen. Es ist erkennbar, dass die maximale Ausspeicherleistung größer als die maximale Transportkapazität des Erdgasnetzes 150 ist. Um die Gasversorgung in diesem Zeitraum sicher zu stellen, wurden während der Kältewelle sämtliche Gasdurchführungstransporte, die unterbrechbar waren, unterbrochen. Transportiert wurden nur noch so genannte feste Kapazitäten. Die in der Region angesiedelten Biogasanlagen 10, die teilweise durch autarke lokale Biogasnetze 610 verbunden sind, können durch die in Fig. 5 dargestellte Netztopologie in einem derartigen Versorgungsfall ohne weiteres eine ausreichend große Menge Biogas aufbereitet in das Erdgasnetz 150 einspeisen, um die Fehlmenge zu kompensieren oder zumindest weitgehend auszugleichen, so dass lokale Abschaltungen von Verbrauchern 510 vermieden oder deutlich reduziert werden können.

Die Erfindung stellt eine beliebige Konvertierbarkeit von Grünstrom, Biogas und Erdgas zur Verfügung, wobei das Biogas aufgrund der Speicherfähigkeit des Energieverbundsystems 600 auch zur Überbrückung von Engpässen in der überörtlichen Strom- und Erdgasversorgung verwendet werden kann. Somit wird eine verbesserte Effizienz der Energienutzung bei hohem Wirkungsgrad unter Einbeziehung von größtenteils bereits vorhandener Infrastruktur erreicht.

## Patentansprüche

1. Energieverbundsystem (600) umfassend ein Biogasnetz (610) mit zumindest einer angekoppelten Biogasanlage (10), ein Erdgasnetz (150) und ein elektrisches Energieversorgungsnetz (100) mit zumindest einer an dieses angekoppelten elektrischen Energiewandlereinrichtung (120) zur regenerativen Stromerzeugung, **dadurch gekennzeichnet, dass**
im Biogasnetz (610) zumindest ein Energiespeicher (300) vorgesehen ist, wenigstens eine Speichereinrichtung (310, 140) für ein methanhaltiges und/oder aus dem methanhaltigen Medium synthetisiertes wasserstoffhaltiges Medium umfasst, und zumindest eine Biogasanlage (10) zu einem durch eine Leitstelle (110) in steuernder Verbindung stehenden Verbundsystem (500) verbunden sind,
und der Energiespeicher (300) wenigstens zeitweise zur Laststeuerung des elektrischen Energieversorgungsnetzes (100) und/oder zur Gaseinspeisung in das Erdgasnetzes (150) einsetzbar ist,
wobei elektrische Energie aus dem elektrischen Energieversorgungsnetz (100) im Überkapazitätsfall zur Biogaserzeugung in der Biogasanlage (10) und/oder zur Versorgung der Speichereinrichtung (300) verwendbar und das entstehende Biogas in den Energiespeicher (300) einspeisbar ist, und im Unterversorgungsfall aufbereitetes Biogas aus dem Energiespeicher (300) in das Erdgasnetz (150) einspeisbar und elektrische Energie aus dem Energiespeicher (300) in das elektrische Energieversorgungsnetz (100) zurückspeisbar ist,
wobei die Speichereinrichtung (310, 140) des Energiespeichers (300) mit einer Vorrichtung (320, 324) zur Erhöhung der Dichte, insbesondere zur Verflüssigung, wenigstens eines Teils des der Speichereinrichtung (310, 140) zuzuführenden Mediums gekoppelt ist, und wobei das medium aus dem Biogasnetz (610) zur Laststeuerung bedarfsweise auf eine gegenüber Normalbedingungen erhöhte Dichte gebracht und im Energiespeicher (300) gespeichert wird und/oder durch Entspannen des auf erhöhter Dichte befindlichen Mediums elektrische Energie aus dem Energiespeicher (300) in das elektrische Energieversorgungsnetz (100) und/oder nach Aufbereitung das Mediums in das Erdgasnetz (150) geleitet wird.

2. Energieverbundsystem nach Anspruch 1, wobei die am Biogasnetz (610) oder direkt an den jeweiligen Energiespeichern (100) angeschlossene wenigstens eine Biogasanlage (10) in zwei Betriebszuständen betreibbar ist, wobei der erste Betriebszustand ein Normalbetrieb mit Generierung von Biogas, Wärme und/oder Elektrizität zur Eigenversorgung und/oder zum Betrieb eines Blockheizkraftwerks mit angeschlossenen Verbrauchern ist, und im zweiten Betriebszustand ein Speicherbetrieb von Biogas erfolgt, in dem Biogas mit gegenüber normalen Bedingungen erhöhter Dichte gespeichert wird.

3. Energieverbundsystem nach Anspruch 1 oder 2, wobei durch die Leitstelle (110) elektrische Energie der mit dem elektrischen Energieversorgungsnetz (100) gekoppelten Energiewandlereinrichtung (120) über die Mehrzahl der Biogasanlagen (10) und/oder über die Mehrzahl der Energiespeicher (300) abhängig von einer verfügbaren Biogaserzeugungskapazität der Biogasanlagen (10) und/oder verfügbaren Kapazität einer Vorrichtung (320, 324) zur Dichteerhöhung des Mediums und/oder einer jeweiligen Speichereinrichtung (310, 140) in den Energiespeichern (300) verteilbar ist.

4. Energieverbundsystem nach einem der Ansprüche 1 bis 3, wobei ein Kommunikationssystem zur Übermittlung von Statusmeldungen der Energiespeicher (300) zur Leitstelle (110) vorgesehen ist.

5. Energieverbundsystem nach einem der Ansprüche 1 bis 4, wobei die Energiespeicher (300) dezentral und bevorzugt in unmittelbarer Nähe des Erdgasnetzes (150) angeordnet sind.

6. Energieverbundsystem nach einem der vorhergehenden Ansprüche, wobei ein Kommunikationssystem des Verbundsystems (500) zur Übermittlung von Statusmeldungen der Biogasanlagen (10), der Energiespeicher (300), der regenerativen elektrischen Energiewandlereinrichtungen (120) und des Erdgasnetzes (150) zur Leitstelle (110) vorgesehen ist.

7. Energieverbundsystem nach einem der vorhergehenden Ansprüche, wobei bei dem Energiespeicher (100) eine Datenschnittstelle (82) vorgesehen ist, um wenigstens eine Aufnahmekapazität der Speichereinrichtung (310, 140) und/oder ein betriebsrelevanter Zustand der Vorrichtung (320, 324) zur Dichteerhöhung an die Leitstelle (110) zu übermitteln.

8. Energieverbundsystem nach einem der vorhergehenden Ansprüche, wobei der zumindest eine Energiespeicher (300) einen Eingang (340) zum Einspeisen elektrischer Energie aus dem elektrischen Energieversorgungsnetz (100) in den zumindest einen Energiespeicher (300) und einen Ausgang (342) zum zeitverzögerten Abgeben elektrischer Energie aus dem Energiespeicher (300) in das elektrische Energieversorgungsnetz (100) umfasst.

9. Energieverbundsystem nach Anspruch 8, wobei der zumindest eine Energiespeicher (300) eine Entspannungsturbine (330) umfasst, die zum Abgeben elektrischer Energie aus der Speichereinrichtung (310, 140) durch das Medium mit erhöhter Dichte antreibbar ist.

10. Verfahren zum Betreiben eines Energiespeichers (300) in einem Energieverbundsystem (600) nach einem der vorhergehenden Ansprüche, wobei zur Laststeuerung eines elektrischen Energieversorgungsnetzes (100) und/oder eines Erdgasnetzes (150) ein methanhaltiges Medium, insbesondere Biogas und/oder ein aus dem methanhaltigen Medium synthetisiertes wasserstoffhaltiges Medium aus einem Biogasnetz (610) bedarfsweise auf eine gegenüber Normalbedingungen erhöhte Dichte gebracht und im Energiespeicher (300) gespeichert wird und/oder durch Entspannen des auf erhöhter Dichte befindlichen Mediums elektrische Energie aus dem Energiespeicher (300) in das elektrische Energieversorgungsnetz (100) und/oder nach Aufbereitung das Mediums in das Erdgasnetz (150) geleitet wird, wobei elektrische Energie aus dem elektrischen Energieversorgungsnetz (100) im Überkapazitätsfall zur Biogaserzeugung in der Biogasanlage (10) und/oder zur Versorgung der Speichereinrichtung (300) verwendet und das entstehende Biogas in den Energiespeicher (300) eingespeist wird, und im Unterversorgungsfall aufbereitetes Biogas aus dem Energiespeicher (300) in das Erdgasnetz (150) eingespeist und elektrische Energie aus dem Energiespeicher (300) in das elektrische Energieversorgungsnetz (100) zurückgespeist wird.

11. Verfahren nach Anspruch 10, wobei die Dichte durch Kompression des Mediums oder durch Verflüssigen des Mediums erhöht wird.

12. Verfahren nach Anspruch 10 oder 11, wobei das Medium zum Verringern der Dichte über eine Entspannungsturbine (330) geleitet wird.

13. Verfahren nach einem der Ansprüche 10 bis 12, wobei eine am Biogasnetz (610) oder direkt an den jeweiligen Energiespeichern (100) angeschlossene wenigstens eine Biogasanlage (10) in zwei Betriebszuständen betrieben wird, wobei der erste Betriebszustand ein Normalbetrieb mit Generierung von Biogas, Wärme und/oder Elektrizität zur Eigenversorgung und/oder zum Betrieb eines Blockheizkraftwerks mit angeschlossenen Verbrauchern ist, und im zweiten Betriebszustand ein Speicherbetrieb von Biogas erfolgt, in dem Biogas mit gegenüber normalen Bedingungen erhöhter Dichte gespeichert wird.

## Claims

1. Energy network system (600) comprising a biogas network (610) having at least one connected biogas facility (10), a natural gas network (150) and an electric energy supply network (100) with at least one electric energy converter device (120) connected to said network for regenerative electric power generation, **characterized in that**
in the biogas network (610) at least one energy reservoir (300) is provided which comprises at least one reservoir device (310, 140) for a methane-containing and/or a hydrogen-containing medium synthesized from said methane-containing medium, and at least one biogas facility (10) connected by a control station (110) in a controlling connection to form a network system (500),
and the energy reservoir (300) can be used at least at times for controlling the load of the electric energy supply network (100) and/or for feeding gas into the natural gas network (150),
where electric energy from the electric energy supply network (100) can be used in the event of over-capacity for biogas generation in the biogas facility (10) and/or for supplying the reservoir device (300), and the resultant biogas can be fed into said energy reservoir (300), and in the event of under-supply treated biogas from said energy reservoir (300) can be fed into the natural gas network (150) and electric energy from said energy reservoir (300) can be fed back into said electric energy supply network (100),
where the reservoir device (310, 140) of the energy reservoir (300) is connected to a device (320, 324) for increasing the density, in particular for liquefaction, of at least part of the medium to be supplied to said reservoir device (310, 140), and where, in order to control the load, the medium from the biogas network (610) is changed as required to a density increased compared with normal conditions and is stored in said energy reservoir (300) and/or where by expanding the medium set to increased density electric energy is passed from said energy reservoir (300) into the electric energy supply network (100) and/or where said medium is passed after treatment into the natural gas network (150).

2. Energy network system according to claim 1, where the at least one biogas facility (10) connected to the biogas network (610) or directly to the respective energy reservoirs (100) can be operated in two operating states, where the first operating state is normal operation with the generation of biogas, heat and/or electricity for internal supply and/or for operation of a combined heat and power station with connected consumer units, and the second operating state is storage operation of biogas in which biogas is stored with an increased density compared with normal conditions.

3. Energy network system according to claim 1 or 2, where the control station (110) can distribute electric energy of the energy converter device (120) linked to the electric energy supply network (100) into said energy reservoirs (300) via the plurality of biogas facilities (10) and/or via the plurality of energy reservoirs (300) depending on an available biogas generation capacity of said biogas facilities (10) and/or on the available capacity of a device (320, 324) for increasing the density of the medium and/or of a respective reservoir device (310, 140).

4. Energy network system according to one of claims 1 to 3, where a communications system is provided for transmitting status reports of the energy reservoir (300) to the control station (110).

5. Energy network system according to one of claims 1 to 4, where the energy reservoirs (300) are arranged decentralized and preferably in the direct vicinity of the natural gas network (150).

6. Energy network system according to one of the preceding claims, where a communications system of the network system (500) is provided for transmitting to the control station (110) status reports of the biogas facilities (10), of the energy reservoirs (300), of the regenerative electric energy converter devices (120) and of the natural gas network (150).

7. Energy network system according to one of the preceding claims, where a data interface (82) is provided at the energy reservoir (100) in order to transmit to the control station (110) at least a receiving capacity of the reservoir device (310, 140) and/or an operation-relevant state of the device (320, 324) for increasing the density.

8. Energy network system according to one of the preceding claims, where the at least one energy reservoir (300) comprises an input (340) for feeding electric energy from the electric energy supply network (100) into the at least one energy reservoir (300) and an output (342) for delayed discharge of electric energy from said energy reservoir (300) into said electric energy supply network (100).

9. Energy network system according to claim 8, where the at least one energy reservoir (300) comprises an expansion turbine (330) that can be driven by the medium with increased density for delivery of electric energy from the reservoir device (310, 140).

10. Method for operating an energy reservoir (300) in an energy network system (600) according to one of the preceding claims, where in order to control the load of an electric energy supply network (100) and/or of a natural gas network (150) a methane-containing and/or a hydrogen-containing medium synthesized from said methane-containing medium from a biogas network (610) is changed as required to a density increased compared with normal conditions and is stored in said energy reservoir (300) and/or where electric energy is passed from said energy reservoir (300) by expanding the medium set to increased density into the electric energy supply network (100) and/or where said medium is passed after treatment into the natural gas network (150), and where in the event of over-capacity electric energy from said electric energy supply network (100) can be used for biogas generation in the biogas facility (10) and/or for supplying said reservoir device (300) and the resultant biogas can be fed into said energy reservoir (300), and in the event of under-supply treated biogas from said energy reservoir (300) can be fed into said natural gas network (150) and electric energy from said energy reservoir (300) can be fed back into said electric energy supply network (100).

11. Method according to claim 10, where the density is increased by compression of the medium or by liquefaction of the medium.

12. Method according to claim 10 or 11, where the medium is passed via an expansion turbine (330) for reducing its density.

13. Method according to one of claims 10 to 12, where an at least one biogas facility (10) connected to the biogas network (610) or directly to the respective energy reservoirs (100) can be operated in two operating states, where the first operating state is normal operation with the generation of biogas, heat and/or electricity for internal supply and/or for operation of a combined heat and power station with connected consumer units, and the second operating state is storage operation of biogas in which biogas is stored with an increased density compared with normal conditions.

## Revendications

1. Système énergétique intégré (600) comprenant un réseau de biogaz (610) avec au moins une installation au biogaz (10) couplée, un réseau de gaz naturel (150) et un réseau d'alimentation en énergie électrique (100) auquel est couplé au moins un dispositif convertisseur d'énergie électrique (120) pour une production de courant à partir de sources d'énergies renouvelables, **caractérisé en ce**
**que** dans le réseau de biogaz (610) sont prévus au moins un accumulateur d'énergie (300) comprenant au moins un dispositif de stockage (310, 140) pour un fluide contenant du méthane et/ou un fluide hydrogéné synthétisé à partir du fluide contenant du méthane, et au moins une installation au biogaz (10) reliée en liaison directrice par l'intermédiaire d'un poste de commande (110) pour former un système intégré (500),
et **que** l'accumulateur d'énergie (300) est utilisable au moins par intermittence pour le contrôle de charge du réseau d'alimentation en énergie électrique (100) et/ou pour l'injection de gaz dans le réseau de gaz naturel (150),
sachant qu'en cas de surcapacité, de l'énergie électrique provenant du réseau d'alimentation en énergie électrique (100) est utilisable pour produire du biogaz dans l'installation au biogaz (10) et/ou pour alimenter le dispositif de stockage (300) et que le biogaz produit peut être injecté dans l'accumulateur d'énergie (300), et qu'en cas de sous-alimentation, du biogaz traité peut être injecté depuis l'accumulateur d'énergie (300) dans le réseau de gaz naturel (150) et de l'énergie électrique peut être réinjectée depuis l'accumulateur d'énergie (300) dans le réseau d'alimentation en énergie électrique (100),
sachant que le dispositif de stockage (310, 140) de l'accumulateur d'énergie (300) est couplé à un dispositif (320, 324) d'augmentation de la masse volumique, en particulier sous forme de liquéfaction, d'au moins une partie du fluide devant être introduit dans le dispositif de stockage (310, 140), et que pour le contrôle de charge, le fluide provenant du réseau de biogaz (610) subit au besoin une augmentation de sa masse volumique par rapport aux conditions normales et est stocké dans l'accumulateur d'énergie (300), et/ou que par détente du fluide présentant la masse volumique accrue, de l'énergie électrique est injectée depuis l'accumulateur d'énergie (300) dans le réseau d'alimentation en énergie électrique (100), et/ou qu'après traitement, le fluide est injecté dans le réseau de gaz naturel (150).

2. Système énergétique intégré selon la revendication 1, dans lequel l'au moins une installation au biogaz (10) raccordée au réseau de biogaz (610) ou directement aux accumulateurs d'énergie (100) respectifs est exploitable selon deux états de fonctionnement, sachant que le premier état de fonctionnement est un fonctionnement normal avec génération de biogaz, de chaleur et/ou d'électricité pour auto-alimentation et/ou pour la marche d'une centrale thermique en montage-bloc avec chauffage à distance avec consommateurs raccordés, et que dans le second état de fonctionnement a lieu une opération de stockage de biogaz, dans laquelle est stocké du biogaz présentant une masse volumique accrue par rapport aux conditions normales.

3. Système énergétique intégré selon la revendication 1 ou 2, dans lequel par le poste de commande (110), de l'énergie électrique du dispositif convertisseur d'énergie (120) couplé au réseau d'alimentation en énergie électrique (100) peut être répartie dans les accumulateurs d'énergie (300) via la pluralité des installations au biogaz (10) et/ou via la pluralité des accumulateurs d'énergie (300) en fonction d'une capacité de production de biogaz disponible des installation au biogaz (10) et/ou d'une capacité disponible d'un dispositif (320, 324) d'augmentation de masse volumique du fluide et/ou d'un dispositif de stockage (310, 140) respectif.

4. Système énergétique intégré selon l'une des revendications 1 à 3, dans lequel est prévu un système de communication pour transmettre au poste de commande (110) des messages d'état des accumulateurs d'énergie (300).

5. Système énergétique intégré selon l'une des revendications 1 à 4, dans lequel les accumulateurs d'énergie (300) sont situés de manière décentralisée et de préférence à proximité immédiate du réseau de gaz naturel (150).

6. Système énergétique intégré selon l'une des revendications précédentes, dans lequel un système de communication du système intégré (500) est prévu pour transmettre au poste de commande (110) des messages d'état provenant des installations au biogaz (10), des accumulateurs d'énergie (300), des dispositifs convertisseurs d'énergies (120) électriques renouvelables et du réseau de gaz naturel (150).

7. Système énergétique intégré selon l'une des revendications précédentes, dans lequel est prévue sur l'accumulateur d'énergie (100) une interface de données (82) pour communiquer au poste de commande (110) au moins une capacité du dispositif de stockage (310, 140) et/ou un état opérationnel important du dispositif (320, 324) d'augmentation de masse volumique.

8. Système énergétique intégré selon l'une des revendications précédentes, dans lequel l'au moins un accumulateur d'énergie (300) comprend une entrée (340) pour injecter de l'énergie électrique depuis le réseau d'alimentation en énergie électrique (100) dans au moins un accumulateur d'énergie (300), et une sortie (342) pour injecter en différé de l'énergie électrique depuis l'accumulateur d'énergie (300) dans le réseau d'alimentation en énergie électrique (100).

9. Système énergétique intégré selon la revendication 8, dans lequel l'au moins un accumulateur d'énergie (300) comprend une turbine de détente (330) qui peut être entraînée par le fluide à masse volumique accrue pour délivrer de l'énergie électrique depuis le dispositif de stockage (310, 140).

10. Procédé d'exploitation d'un accumulateur d'énergie (300) dans un système énergétique intégré (600) selon l'une des revendications précédentes, sachant que pour contrôler la charge d'un réseau d'alimentation en énergie électrique (100) et/ou d'un réseau de gaz naturel (150), un fluide contenant du méthane, en particulier du biogaz et/ou un fluide hydrogéné synthétisé à partir du fluide contenant du méthane provenant d'un réseau de biogaz (610) subit au besoin une augmentation de sa masse volumique par rapport aux conditions normales et est stocké dans l'accumulateur d'énergie (300), et/ou que par détente du fluide présentant la masse volumique accrue, de l'énergie électrique est injectée depuis l'accumulateur d'énergie (300) dans le réseau d'alimentation en énergie électrique (100), et/ou qu'après traitement, le fluide est injecté dans le réseau de gaz naturel (150), et qu'en cas de surcapacité, de l'énergie électrique provenant du réseau d'alimentation en énergie électrique (100) est utilisée pour produire du biogaz dans l'installation au biogaz (10) et/ou pour alimenter le dispositif de stockage (300) et que le biogaz produit est injecté dans l'accumulateur d'énergie (300), et qu'en cas de sous-alimentation, le biogaz produit est injecté depuis l'accumulateur d'énergie (300) dans le réseau de gaz naturel (150) et de l'énergie électrique est réinjectée depuis l'accumulateur d'énergie (300) dans le réseau d'alimentation en énergie électrique (100).

11. Procédé selon la revendication 10, dans lequel la masse volumique est augmentée par compression du fluide ou par liquéfaction du fluide.

12. Procédé selon la revendication 10 ou 11, dans lequel pour diminuer sa masse volumique, le fluide est guidé à travers une turbine de détente (330).

13. Procédé selon l'une des revendications 10 à 12, dans lequel l'au moins une installation au biogaz (10) raccordée au réseau de biogaz (610) ou directement aux accumulateurs d'énergie (100) respectifs est exploitée selon deux états de fonctionnement, sachant que le premier état de fonctionnement est un fonctionnement normal avec génération de biogaz, de chaleur et/ou d'électricité pour auto-alimentation et/ou pour la marche d'une centrale thermique en montage-bloc avec chauffage à distance avec consommateurs raccordés, et que dans le second état de fonctionnement a lieu une opération de stockage de biogaz, dans laquelle est stocké du biogaz présentant une masse volumique accrue par rapport aux conditions normales.
